(19) Europäisches Patentamt / European Patent Office / Office européen des brevets

(11) **EP 2 639 969 B1**

(12) **EUROPEAN PATENT SPECIFICATION**

(45) Date of publication and mention
of the grant of the patent:
**03.09.2014  Bulletin 2014/36**

(51) Int Cl.:
*H04B 7/02* *(2006.01)*    *H04B 7/04* *(2006.01)*

(21) Application number: **12305301.9**

(22) Date of filing: **15.03.2012**

(54) **Apparatus, method and computer program for transmit precoding**

Vorrichtung, Verfahren und Computerprogramme zur Übertragungsvorcodierung

Appareil, procédé et programme informatique pour transmettre un précodage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2013  Bulletin 2013/38**

(73) Proprietor: **ALCATEL LUCENT**
**92100 Boulogne-Billancourt (FR)**

(72) Inventors:
• **Aziz, Danish**
**70435 Stuttgart (DE)**
• **Weber, Andreas**
**74251 Lehrensteinsfeld (DE)**
• **Boccardi, Federico**
**20063 Cernusco Sul Naviglio (MI) (IT)**

(74) Representative: **Wetzel, Emmanuelle**
**Alcatel Lucent**
**Intellectual Property & Standards**
**70430 Stuttgart (DE)**

(56) References cited:
**WO-A1-2011/158302    US-A1- 2010 035 627**

• **PAPADOGIANNIS A ET AL: "A Dynamic
Clustering Approach in Wireless Networks with
Multi-Cell Cooperative Processing", IEEE
INTERNATIONAL CONFERENCE ON
COMMUNICATIONS, 2008 : ICC '08 ; 19 - 23 MAY
2008, BEIJING, CHINA, IEEE, PISCATAWAY, NJ,
USA, 19 May 2008 (2008-05-19), pages 4033-4037,
XP031266078, ISBN: 978-1-4244-2075-9**
• **CHRIS T K NG ET AL: "Linear Precoding in
Cooperative MIMO Cellular Networks with
Limited Coordination Clusters", IEEE JOURNAL
ON SELECTED AREAS IN COMMUNICATIONS,
IEEE SERVICE CENTER, PISCATAWAY, US, vol.
28, no. 9, 1 December 2010 (2010-12-01), pages
1446-1454, XP011336910, ISSN: 0733-8716, DOI:
10.1109/JSAC.2010.101206**

**Description**

Embodiments of the present invention generally relate to wireless communications and, in particular, to transmit precoding techniques for aligning interfering signals at a receiver device of a wireless communication system.

Background

Demands for higher data rates for mobile services are steadily increasing. At the same time modem mobile communication systems as 3$^{rd}$ Generation systems (3G), 4$^{th}$ Generation systems (4G), and future beyond-4G systems provide or will provide enhanced technologies, which enable higher spectral efficiencies and allow for higher data rates and cell capacities. As operators are seeking to extend the coverage and capacity of their networks advanced transmission concepts are one way forward.

One approach to achieve improvements in the design of enhanced wireless communication networks is to improve interference mitigation techniques. An overall capacity of a wireless or cellular communication network is, among others, limited by interference between different cells (inter-cell interference), which are using mutually non-orthogonal physical radio resources such as time, frequency and/or space for communicating with their associated users.

Over the last years Interference Alignment (IA) generated a lot of interest in the scientific community as a framework for tackling inter-cell interference in a multi-antenna cellular system, i.e., a cellular system wherein the base stations and/or mobile terminals are equipped with multiple antennas, respectively. The basic idea behind IA based transmit schemes is to precode transmissions from different cooperating (or coordinated) transmitters such that interference they infer to unintended receivers is (spatially) aligned at the receivers' side and therefore can be suppressed in a more efficient way. For example, a limited set of base stations forming a base station cluster may perform a coordinated linear precoding of transmit signals, respectively, for obtaining spatial interference alignment among said cluster of base stations or cells. Thereby, coordination among base station of the coordinated cluster means that a first base station of said cluster has access to Channel State Information (CSI) and/or interference information of a mobile terminal served by a second base station of the coordinated cluster. Hence, a coordinated cluster of base station typically comprises two or more (e.g. three) base stations or cells. According to the 3GPP (3$^{rd}$ Generation Partnership Project) terminology a cell's base station may also be referred to as NodeB or eNodeB, while an associated mobile terminal may also be referred to as User Equipment (UE).

In general, precoding may be regarded as a generalization of beamforming to support multi-layer transmission in multi-antenna wireless communications. In conventional single-layer beamforming, the same signal is emitted from each of the transmit antennas with appropriate weighting such that the signal power is maximized at the receiver output. When the receiver has multiple antennas, single-layer beamforming cannot simultaneously maximize the signal level at all of the receive antennas. Thus, in order to maximize the throughput in multiple receive antenna systems, multi-layer beamforming is required. In point-to-point (p-t-p) systems, precoding means that multiple data streams may be emitted from multiple transmit antennas with independent and appropriate weightings such that the link throughput is maximized at the receiver output. In Multi-User Multiple-Input-Multiple-Output (MU-MIMO), the data streams are intended for different users (known as SDMA = Space-Division Multiple Access) and some measure of the total throughput (e.g., the sum performance) is maximized. In point-to-point systems, some of the benefits of precoding can be realized without requiring Channel State Information (CSI) at the transmitter, while such information is essential to handle the co-user interference alignment.

For example, in MIMO networks, interference alignment, as a linear precoding technique for the transmitter, uses the spatial dimension offered by multiple antennas for alignment of interference at a particular receiver. Different users/transmitters (i.e. base stations) may coordinate their transmissions, using linear precoding, such that interference signal, resulting from the precoded transmission signals that add up at the receiver (i.e. mobile terminal), lies in a reduced dimensional subspace at each receiver.

Initial works presented by V.R. Cadambe and S.A. Jafar: "Interference Alignment and Degrees of Freedom of the K-User Interference Channel ", IEEE Trans. Inform. Theory, vol.54, No.8, Aug. 2008, and K. S. Gomadam, V. R. Cadambe and Syed A. Jafar, "Approaching the Capacity of Wireless Networks through Distributed Interference Alignment", Proceedings of IEEE GLOBECOM, New Orleans, LA, Dec. 2008, studied the behavior of IA under ideal assumptions, like Gaussian independent and identically distributed (i.i.d.) channels, limited numbers of transmitter-receiver links, no interference from transmitters outside a coordination (i.e. base station cluster), perfect knowledge of the interfering terms.

In O. El Ayach, S. W. Peters and R. W. Heath: "The Feasibility of Interference Alignment Over Measured MIMO-OFDM Channels", IEEE Trans. Veh. Technol., vol. 59, No. 9, Nov. 2010, IA had been evaluated with measured Multiple-Input Multiple-Output Orthogonal Frequency-Division Multiplexing (MIMO-OFDM) interference channels. However, the assessments were carried out assuming a set-up with three transmitters/receivers without interference from transmitters outside the coordination area formed by the cluster of coordinated base stations.

The numerical study in R. Tresch and M. Guillaud: "Clustered Interference Alignment in Large Cellular Networks", Proceedings of IEEE PIMRC, Tokio, Japan, Sept. 2009, has investigated a larger cellular setup, under the assumption of zero forcing receivers. However, IA was compared with a non-cooperative baseline transmission employing eigenmode transmission and fractional frequency reuse.

The work in B. Zhuang, R. A. Berry, and M. L. Honig: "Interference Alignment in MIMO Cellular Networks", Proceedings of IEEE ICASSP, Prague, Czech Republic, May 2011, also employed a numerical approach to study IA in larger cellular networks but it was focused in deriving the necessary zero forcing conditions and modifying the iterative algorithms for distributed IA in a TDD based network.

Multi cell and multi user IA studies were first presented in C. Suh, M. Ho, and D. Tse: "Downlink interference alignment," Global Telecommunications Conference (GLOBECOM 2010), 2010 IEEE, initially using a scenario with two base stations (BSs) and two user equipments (UEs) and then extending it to a large cellular network only with an interference to noise ratio factor. The gains of IA were assessed under the assumption of a hybrid (IA with Matched Filtering) transceiver scheme and a user specific scheduling.

The document "Linear Precoding in Cooperative MIMO Cellular Networks with Limited Coordination Clusters" discloses a cooperative multiple-antenna downlink cellular network where maximization of a concave function of user rates is considered. All base stations share channel state information, but each user's message is only routed to those that participate in the user's coordination cluster.

Unfortunately, the performance gains of the mentioned prior-art IA concepts collapse in a real-world cellular network, where mobile terminals as receivers also experience interference from further cells outside a coordinated base station cluster, which will also be referred to as out-of-cluster interference in the sequel. As a result, only aligning the interference within the cluster does not help and even other baseline transmission schemes are underperforming the interference alignment. Hence, it is desirable to provide further improved interference alignment concepts.

In the subsequent specification the following mathematical notation will be used: '$\mathbf{A}$' represents a matrix; '$\mathbf{a}$' is a vector. '$\mathbf{A}^H$' represents the complex conjugate transpose of '$\mathbf{A}$'. $\|\mathbf{A}\|$ represents the Frobenius norm. '$\mathbf{I}$' is used for square identity matrix, $span(\mathbf{A})$ is used for the span of columns vectors of $\mathbf{A}$. '$\xi(\mathbf{A})$' represents the matrix of eigenvectors of '$\mathbf{A}$'. $E[.]$ is the expectation operator. A '*Site*' comprises of three base stations 'BSs' with collocated-sectorized antennas. A 'BS' represents a cell or a sector of a '*Site*'. A mobile user or a receiver may be represented by the word User Equipment (UE).

## Summary

In a coordinated clustered wireless communication system, suppose that each cluster of transmitters comprises two or more transmitters in coordination for interference alignment at associated receivers. It is one finding of the present invention that each transmitter of a cluster may design its transmit side precoding such that the transmitter finds a compromise between an improvement of a signal towards its desired associated receiver and a degree of alignment of its signal towards an undesired receiver with the direction of arrival of maximum of total interference power at the undesired receiver.

Depending on whether we look at downlink, i.e. the communication direction from a base station to an associated mobile terminal, or at uplink, i.e. the communication direction from a mobile terminal to its serving base station, a transmitter may be a base station (for downlink) or a mobile terminal (for uplink). Correspondingly, the receiver may be a mobile station (for downlink) or a base station (for uplink). Note that embodiments of the present invention are in principle applicable to both scenarios, i.e. downlink as well as uplink. That is to say, while for a downlink scenario a transmitter cluster is a base station or cell cluster, it is a cluster of coordinated (clustered) mobile terminals for the uplink scenario.

For downlink, suppose that each cluster of base stations or cells comprises two or more cells in coordination for interference alignment at associated mobile terminal receivers. It is one finding of the present invention that each cell of a cluster may design its transmit side precoding such that each cell finds a compromise between an improvement of a signal towards its desired associated mobile terminal and a degree of alignment of its signal towards an undesired mobile terminal in an adjacent coordinated cell of the cluster with an direction of arrival of maximum interference at the undesired mobile terminal.

For that purpose embodiments of the present invention propose to not only use information on interference caused at a receiver by transmitters of the coordinated cluster but to also employ information on interference caused at the receiver by further transmitters of the wireless communications system outside the coordinated transmitter cluster. That is to say, an overall system-wide interference is accounted for.

According to a first aspect of the present invention it is provided an apparatus for precoding a signal at a transmitter associated to a wireless communication system. Thereby the wireless communication system may, for example, correspond to one of the wireless communication systems standardized by the 3rd Generation Partnership Project (3GPP), as the Global System for Mobile Communications (GSM), Enhanced Data rates for GSM Evolution (EDGE), GSM/EDGE Radio Access Network (GERAN), Universal Terrestrial Radio Access Network (UTRAN) or Evolved UTRAN (E-UTRAN), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms wireless communication system and mobile communication network may be used synonymously.

In embodiments, the wireless communication system may comprise mobile terminals and base stations. Depending on the scenario, i.e. downlink or uplink, either one may function as a transmitter or receiver, respectively. For downlink, a base station will take over transmitter functionalities while a mobile terminal takes the receiver part. In the uplink it is vice versa, i.e., a base station works as a receiver while a mobile terminal works as a transmitter. A mobile terminal may correspond to a smartphone, a cell phone, user equipment, a laptop, a notebook, a personal computer, a Personal Digital Assistant (PDA), a Universal Serial Bus (USB) -stick, a car, etc. Thereby a mobile terminal may be equipped with a plurality of co- or cross-polarized antennas forming an antenna array of correlated or uncorrelated antenna elements. The usage of multiple antennas (i.e. $\geq$ 2 antennas) at the mobile terminal may lead to MIMO or SIMO (Single-Input Multiple-Output) channels from a serving base station to the mobile terminal. As mentioned before, a mobile terminal may also be referred to as User Equipment (UE) in line with the 3GPP terminology.

A base station can be located in the fixed or stationary part of the network or system. A base station may correspond to a remote radio head, a transmission point, an access point, a macro cell, a small cell, a micro cell, a femto cell, a metro cell etc. A base station can be a wireless interface of a wired network, which enables transmission of radio signals to a UE or mobile terminal. Such a radio signal may comply with radio signals as, for example, standardized by 3GPP or, generally, in line with one or more of the above listed systems. Thus, a base station may correspond to a NodeB, an eNodeB, a BTS, an access point, etc. Like a mobile terminal, also a base station may be equipped with a plurality of antennas (i.e. $\geq$ 2 antennas), leading to MIMO communication channels between an associated mobile terminal and its serving base station. In the sequel the terms base station and cell will be used interchangeably.

According to embodiments of the present invention the wireless communication system comprises a transmitter cluster comprising a first transmitter and at least a second transmitter, wherein the first transmitter communicates with a first receiver and the second transmitter communicates with a second receiver. The transmitter cluster may be understood as a coordinated cluster of adjacent or neighboring transmitters. Thereby the coordination between the transmitters of the cluster takes place in the sense that, for example, CSI and/or interference information determined by the first receiver associated to the first transmitter may be used for interference alignment procedures (i.e. precoding) of the second transmitter. As has been explained before, for a downlink scenario, a transmitter may be a base station, while a receiver is formed by a mobile terminal. In this case, the transmitter cluster is a (coordinated) base station or cell cluster. For an uplink scenario, a transmitter may be a mobile terminal while a receiver is formed by a base station. In this case, the transmitter cluster is a (coordinated) mobile station cluster.

According to embodiments the apparatus comprises first processing circuitry or means operable to determine a first transmit precoding information based on interference experienced or seen at the second receiver due to interfering signal transmissions from at least the first transmitter of the transmitter cluster, i.e. from interfering transmitters within the cluster, and from further transmitters of the wireless communication system outside the transmitter cluster, i.e. from interfering transmitters outside the cluster. Thereby "determining" the first transmit precoding information may comprise receiving and/or computing the first transmit precoding information. For this reason the first processing circuitry may comprise receiver circuitry and/or a signal processor. The first transmit precoding information comprises information on interference "seen" at the second receiver from more than other interfering transmitters of the coordinated transmitter cluster, i.e. at least the first transmitter. Instead, the first transmit precoding information additionally accounts for out-of-cluster interference seen at the second receiver from remaining transmitters of the wireless network not belonging to the transmitter cluster. This advantageously enables accounting for interference scenarios experienced in real (cellular) communication systems, where the communication network does not end at the boundaries of the coordinated cluster.

The apparatus according to embodiments of the present invention further comprises second processing circuitry or means operable to determine second transmit precoding information based on cross-channel state information of a wireless communications channel between the second receiver and at least the first transmitter of the cluster. That is to say, the second transmit precoding information may comprise cross-channel information of interfering transmitters within the transmitter cluster. Thereby "determining" the second transmit precoding information may comprise receiving and/or computing the second transmit precoding information. For this reason the second processing circuitry may comprise receiver circuitry and/or a signal processor. Also, the first and the second processing circuitry may be comprised by a common processing circuitry of the apparatus, which may be a centralized or decentralized processing circuitry of the coordinated transmitter cluster. The cross-channel state information of the wireless communications channel between the second receiver and the first transmitter may comprise complex-valued quantized or unquantized channel coefficients of a MIMO channel between multiple antennas of the second receiver and multiple antennas of the interfering first transmitter of the coordinated cluster. That is to say, the cross-channel state information may represent an undesired cross-talk between the second receiver and the first transmitter or vice versa.

According to embodiments the apparatus yet further comprises a transmit precoder operable to weigh a signal transmitted from the first transmitter to the first receiver based on at least the determined first and second transmit precoding information. That is to say, the transmit precoder may determine or compute precoding coefficients for linearly precoding the transmit signal based on at least the first and second transmit precoding information. In some embodiments the linear precoding may additionally be performed based on third transmit precoding information based on channel state information of a wireless communications channel between the first receiver and the first transmitter , i.e. considering a wireless channel for the desired signal from the first transmitter to the first receiver. In other words, some embodiments may consider a desired signal for an associated receiver and as well as out of cluster interference in the design of transmit precoding. For example, the precoding coefficients may be arranged in a precoding vector or a precoding matrix, depending on the antenna configuration at both the first transmitter and its associated first receiver. The typically complex-valued precoding coefficients may be combined, e.g. multiplied, with typically complex-valued transmit symbols of the transmit signal. This may preferably be done in the digital baseband domain. Hence, the apparatus for precoding the signal, which may also be referred to as transmit precoding apparatus, may perform the linear precoding e.g. for interference alignment at the first receiver by complex digital baseband operations.

The transmit precoding apparatus may either comprise distributed entities, which may be distributed among various devices of the coordinated cluster, or it may be incorporated in the transmitters of the coordinated cluster, respectively. That is to say, the functional entities of the transmit precoding apparatus, i.e. the first and second processing circuitry as well as the transmit precoder, may either be distributed among transmitters and associated receivers, or each of the at least two transmitters may e.g. comprise an individual transmit precoding apparatus with all its functional elements. Typically, the functionalities of the transmit precoding apparatus for a first transmitter may be distributed among the first transmitter and at least the second receiver. That is to say, the processing circuitries may be distributed among various elements/entities of the coordinated cluster.

Hence, according to a further aspect of the present invention it is provided a first transmitter of a wireless communication system, wherein the wireless communication system comprises a first (coordinated) transmitter cluster as well as further transmitter clusters. The first transmitter cluster comprises the first transmitter and at least a second transmitter, wherein the first transmitter communicates with a first receiver and the second transmitter communicates with a second receiver. The first transmitter comprises a transmit precoding apparatus according to embodiments of the present invention, wherein the apparatus's first processing circuitry is operable to receive, from the second transmitter and/or from the second receiver and/or some central processing entity of the cluster, the information on the interference experienced at the second receiver. The apparatus' second processing circuitry is operable to receive, from the second transmitter and/or from the second receiver and/or the central processing entity, the information on the cross-channel state information of a wireless communications channel between the second receiver and the first transmitter. As mentioned before, the first transmitter may be a first base station transmitter of a coordinated base station cluster (for downlink), or a first mobile terminal transmitter of a coordinated mobile station cluster (for uplink).

Embodiments also comprise a receiver of a wireless communication system, wherein wireless communication system comprises at least one (coordinated) transmitter cluster comprising a first transmitter and at least a second transmitter, wherein the first transmitter communicates with the receiver and the at least second transmitter communicates with a second receiver. In case of downlink the receivers may be or coupled to first and second mobile terminals, respectively, while the transmitters may be or coupled to first and second base stations belonging to a base station cluster.

The receiver comprises processing circuitry or means operable to determine a transmit precoding information based on interference experienced at the receiver due to interfering signal transmissions from at least the second interfering transmitter of the transmitter cluster and/or based on interference experienced at the receiver due to interfering signal transmissions from interfering transmitters of the wireless communication system outside the transmitter cluster. In other words, the processing circuitry of the receiver may be operable or adapted to determine the first and the second transmit precoding information, wherein the first transmit precoding information comprises information on an overall interference seen by the receiver, and wherein the second transmit precoding information comprises information on an in-cluster interference experienced by the receiver. For example, the first transmit precoding information may comprise an interference covariance matrix of the receiver or at least one dominant eigenvector thereof. The second transmit precoding information may, for example, comprise a MIMO cross-channel or leakage matrix or coefficients thereof representing CSI from the second transmitter to the receiver associated to the first transmitter. According to various embodiments, the receiver may be a first mobile terminal served by a first base station of a cell cluster (for downlink), or a base station communicating with a mobile terminal of a coordinated mobile terminal cluster (for uplink).

Further, the receiver comprises a feedback transmitter which is operable to transmit (i.e. provide) the determined transmit precoding information, comprising the first and/or the second transmit precoding information, to at least one network entity of the cluster. Thereby the at least one network entity may be the first or the second transmitter, which may additionally communicate with each other to share data. In the downlink case, for example, the transmitters are base station and may communicate via an inter base station interface, such as the X2-interface, for example. Also, the at least one network entity may be central processing entity of the coordinated cluster, which may process the fed back transmit precoding information for all transmitters of the cluster.

According to yet a further aspect it is provided a method for precoding a transmit signal in a wireless communication system. The wireless communication system comprises a transmitter cluster comprising first transmitter and at least a second transmitter, wherein the first transmitter communicates with a first receiver and the second transmitter communicates with a second receiver. The transmitter cluster may be coordinated for achieving interference alignment at receivers associated to the cluster. The method comprises the following steps:

- determining first transmit precoding information based on interference experienced at the second receiver due to interfering signal transmissions from at least the first transmitter of the transmitter cluster and from transmitters of the wireless communication system outside the transmitter cluster;
- determining a second transmit precoding information based a cross-channel state information of a wireless communications channel between the second receiver and the first transmitter; and
- precoding the transmit signal transmitted from the first transmitter to the first receiver based on the determined first and second transmit precoding information.

Likewise, the method also comprises the following steps:

- determining first transmit precoding information based on interference experienced at the first receiver due to interfering signal transmissions from at least the second transmitter of the transmitter cluster and from transmitters of the wireless communication system outside the transmitter cluster;
- determining a second transmit precoding information based a cross-channel state information of a wireless communications channel between the first receiver and the at least second transmitter of the cluster; and
- precoding a signal transmitted from the second transmitter to the second receiver based on the determined first and second transmit precoding information.

It will be understood that the order of steps may deviate from the above-given order according to various embodiments.

Some embodiments comprise a digital control circuit installed within the apparatus for performing the method, i.e. the transmit precoding apparatus. Such a digital control circuit, e.g. a digital signal processor (DSP) or an Application-Specific Integrated Circuit (ASIC), needs to be programmed accordingly. Hence, yet further embodiments also provide a computer program having a program code for performing embodiments of the method, when the computer program is executed on a computer or a digital processor.

Embodiments of the present invention may provide sustainable gains with respect to higher spectral efficiencies, higher data rates and/or improved cell capacities in the system performance with less complexity.

Embodiments provide an innovative step towards the improvements in the performance of wireless cellular system with the help of an improved inter-cell interference alignment technique. Embodiments proposed an interference alignment scheme, which not only improves existing schemes but also outperforms the base line transmissions. Embodiments may provide up to 10% gains in spectral efficiency and up to 35% gains in cell edge throughput over the other best baseline scheme. Some embodiments are based on considering a desired signal for an associated receiver and as well as out of cluster interference in the design of transmit precoding. Moreover, embodiments may be simpler than the original interference alignment in the sense that embodiments may be based on a two cells coordination cluster and embodiments can be designed in a distributed fashion in each cell and some embodiments require lesser amount of feedback.

Brief description of the Figures

Some embodiments of apparatuses and/or methods will be described in the following by way of example only, and with reference to the accompanying figures, in which

Fig. 1a  illustrates a distribution of an angle between the maximum eigenvectors of an interference covariance matrix in two consecutive transmission time intervals;

Fig. 1b  illustrates a trace of an angle between the maximum eigenvectors of the interference covariance matrix of a mobile terminal;

Fig. 2b  illustrates an exemplary cellular network comprising a coordinated cell cluster of two cells;

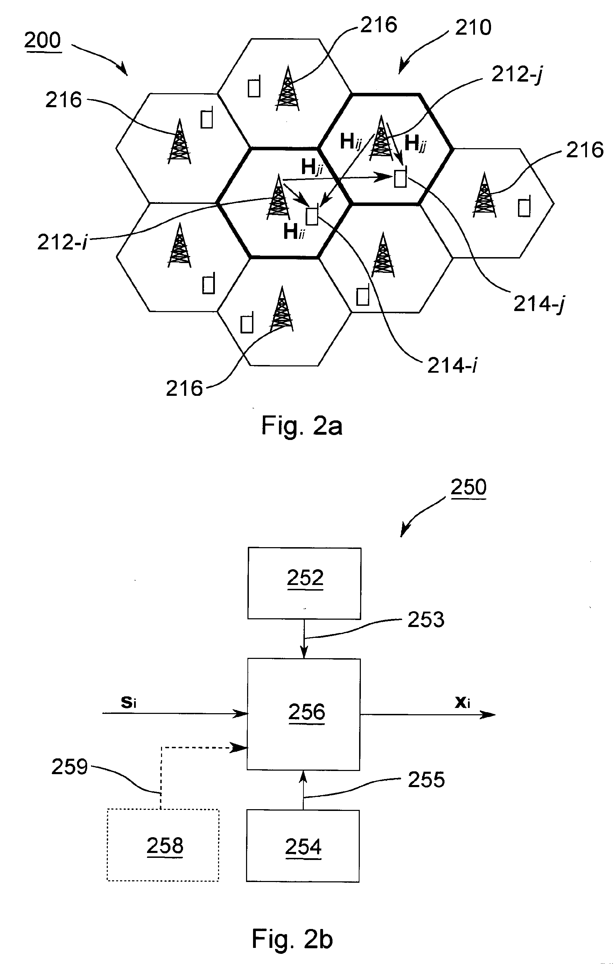

Fig. 2b    illustrates a block diagram of an transmit precoding apparatus, according to an embodiment;

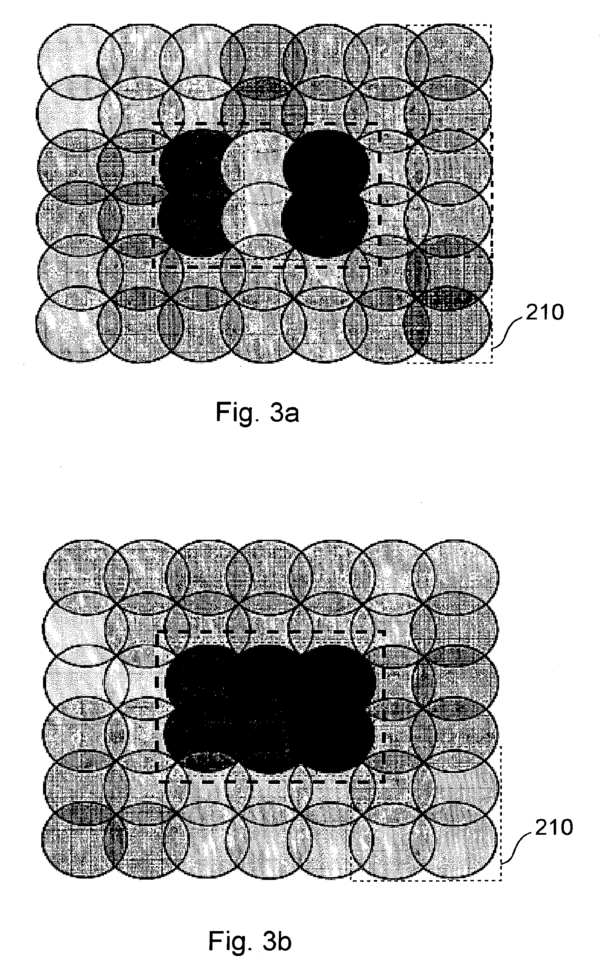

Fig. 3a    depicts an embodiment of a two-cell coordination setup of 42 cells with six central cells being evaluated;

Fig. 3b    depicts an embodiment of a three-cell coordination setup of 42 cells with six central cells being evaluated;

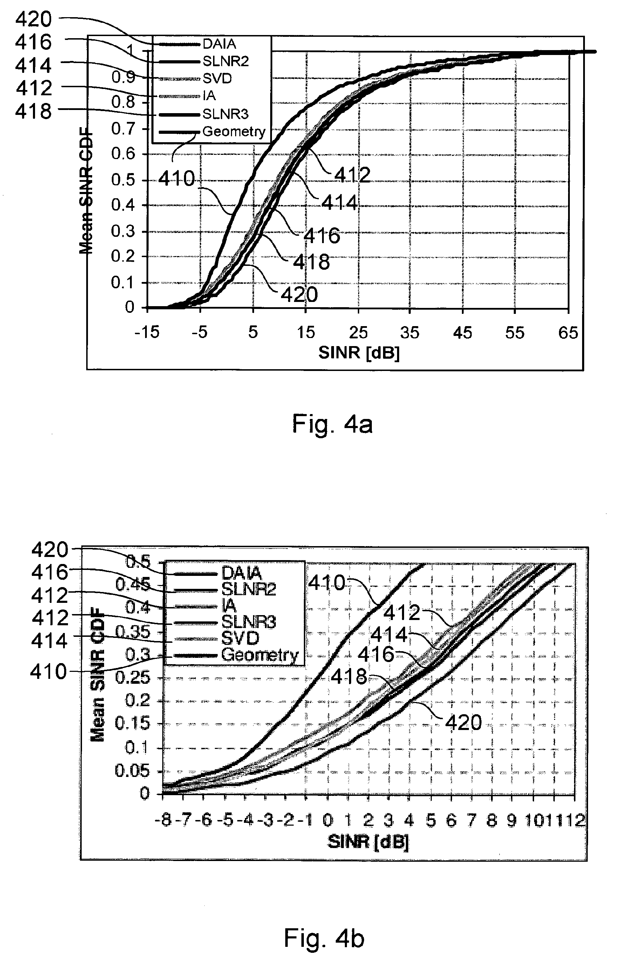

Fig. 4a    shows simulation results of a system output SINR with MMSE receiver for various transmit precoding schemes in both the coordination scenarios of Figs. 3a, b; and

Fig. 4b    shows an image enlargement of Fig. 4a.

Description of Embodiments

Various example embodiments will now be described more fully with reference to the accompanying drawings in which some example embodiments are illustrated. In the figures, the thicknesses of lines, layers and/or regions may be exaggerated for clarity.

Although the principle of the present invention will now be described referring to embodiments which are applicable to the downlink, it will be apparent to the skilled person that uplink scenarios, where mobile terminal function as transmitters and base stations function as receivers, are also covered by the scope of the present invention.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

For exemplification of embodiments of the present invention a MIMO-OFDM system is considered, with $I$ base stations as transmitters, each equipped with $M$ antennas and each serving a single UE as a receiver equipped with $N$ antennas. Note that embodiments of the present invention may also be employed in other present and future wireless communications systems using deviating Radio Access Technologies (RATs). MIMO-OFDM, which may be used in LTE-systems and beyond, for example, is hence only to be considered as an illustrative example.

We refer the $i$-th UE or receiver as to the UE served by the $i$-th BS or transmitter ($i = 1 .. I$). For the sake of simplicity, the subsequent mathematical interference alignment analysis is based on a single (narrowband) OFDM subcarrier, whereas the simulation results presented below will be given for a wideband channel. The narrowband channel, i.e. the subcarrier channel, between the $m$-th transmit antenna of a base station and the $n$-th receive antenna of a mobile terminal may be modeled as a Rayleigh fading channel.

A discrete-time complex baseband received signal $\mathbf{y}_i$ by the $i$-th user may be written as

$$\mathbf{y}_i = \mathbf{H}_{ii}\mathbf{x}_i + \sum_{j=1; j\neq i}^{I} \mathbf{H}_{ij}\mathbf{x}_j + \mathbf{n}_i \qquad (1)$$

where $\mathbf{H}_{ii} \in C^{N \times M}$ denotes the $N \times M$ channel matrix between the $i$-th BS and the corresponding (i.e. associated) UE, $\mathbf{x}_i \in C^{M \times 1}$ denotes the signal transmitted by the $i$-th BS, $\sum_{j=1;j \neq i}^{I} \mathbf{H}_{ij}\mathbf{x}_j \in C^{N \times 1}$ denotes the interfering term due to the transmission of the other $I$-1 BSs to the corresponding UEs and $\mathbf{n}_i$ denotes a $C^{N \times 1}$-dimensional complex additive white Gaussian noise. Assuming a precoded transmission to the $i$-th user of rank $r_i$, the transmitted signal at the $i$-th BS may be obtained as $x_i = \mathbf{P}_i\mathbf{s}_i$, where $\mathbf{P}_i \in C^{N \times r_i}$ denotes a precoding matrix and $\mathbf{s}_i \in C_i^{r \times 1}$ denotes a vector of transmit symbols. A number of simultaneously transmitted streams a MIMO channel can support is commonly referred to as the channel rank and the actually transmitted number of streams is correspondingly termed transmission rank $r_i$. In the most general context, transmission rank $r_i$ can be defined as the number of complex-valued independent modulation symbols transmitted per time-frequency resource. We assume a transmit power constraint at each BS, uniform transmit power over all transmit antennas and that the precoding matrices $\mathbf{P}_i$ are unitary with unit norm.

The signal after receive combining may be obtained as

$$\mathbf{y}'_i = \mathbf{G}_i\mathbf{y}_i, \qquad (2)$$

wherein $\mathbf{G}_i \in C^{r_i \times N}$ denotes a receive matrix also having unit norm. Note that, all the expressions for the transmit precoders and the receive combiner given in this document are normalized to unity but for the sake of brevity we have not shown the normalization operation in the mathematical expressions.

The conventional IA based transmit precoding scheme of V.R. Cadambe and S.A. Jafar, "Interference Alignment and Degrees of Freedom of the K-User Interference Channel ", IEEE Trans. Inform. Theory, vol.54, No.8, Aug. 2008, and K. S. Gomadam, V. R. Cadambe and Syed A. Jafar, "Approaching the Capacity of Wireless Networks through Distributed Interference Alignment", Proceedings of IEEE GLOBECOM, New Orleans, LA, Dec. 2008, adjusts an interference space received at the $i$-th UE, such that UE $i$-th's receiver has enough degrees-of-freedom to cancel this interference. For example, assuming a $r_i$-rank transmission to the $i$-th UE, then the interference signal space should be confined to $N$ - $r_i$ dimensions. We refer to K. S. Gomadam, V. R. Cadambe and Syed A. Jafar, "Approaching the Capacity of Wireless Networks through Distributed Interference Alignment", Proceedings of IEEE GLOBECOM, New Orleans, LA, Dec. 2008, for a detailed description of the conventional IA concept. In the following we only briefly recall the precoding matrix/receiver construction for the case of a coordination cluster with three BSs, as this case is relevant for the coordination setup according to embodiments of the present invention.

The conventional interference alignment condition for the $i$-th UE side can be written as,

$$span(\mathbf{H}_{ij}\mathbf{P}_j) = span(\mathbf{H}_{ik}\mathbf{P}_k), \qquad (2)$$

assuming BSs $j$ and $k$ as interferers for the $i$-th UE. Eq. (3) states that the interference experienced at the $i$-th UE caused by the $j$-th BS and the $k$-th BS shall span the same subspace, i.e. shall be aligned. In order to achieve this, the precoding matrices $\mathbf{P}_j$ and $\mathbf{P}_k$ for the $j$-th BS and the $k$-th BS may be chosen accordingly. The corresponding interference alignment conditions for UEs $j$ and $k$ may be given with an equivalent formulation. By combining the alignment conditions for users $i, j$ and $k$, the precoding matrix for the $i$-th BS serving the $i$-th UE can be calculated as,

$$span(\mathbf{P}_i) = span(\mathbf{H}_{ki}^{-1}\mathbf{H}_{kj}\mathbf{H}_{ij}^{-1}\mathbf{H}_{ik}^{-1}\mathbf{H}_{jk}\mathbf{H}_{ji}\mathbf{P}_i) \qquad (3)$$

from which $\mathbf{P}_i$ can be obtained from the dominant $r_i$ eigenvectors of $(\mathbf{H}_{ki}^{-1}\mathbf{H}_{kj}\mathbf{H}_{ij}^{-1}\mathbf{H}_{ik}^{-1}\mathbf{H}_{jk}\mathbf{H}_{ji})$. Again we refer to reference K. S. Gomadam, V. R. Cadambe and Syed A. Jafar, "Approaching the Capacity of Wireless Networks through Distributed Interference Alignment", Proceedings of IEEE GLOBECOM, New Orleans, LA, Dec. 2008, for the details. The receiver matrix weights in the latter reference are calculated in order to satisfy the following conditions

$$\mathbf{G}_i\mathbf{H}_{ij}\mathbf{P}_j = 0 \quad \forall j \neq i. \qquad (4)$$

It is emphasized that in the following interference alignment will be referred to as a precoding technique independently of the receive technique used.

Before we go in the details of the interference alignment scheme according to embodiments of the present invention we first investigate the properties of an interference covariance matrix at any UE present in the wireless communication system. The total interference (i.e. in-cluster interference plus out-of-cluster interference) impinging on the receive antennas of an $i$-th UE (receiver) in a given time-frequency sample may be represented by information on interference in form of a interference covariance matrix $\mathbf{J}_i$ and may be given as follows:

$$\mathbf{J}_i = \sum_{\forall j; j \neq i} (\mathbf{H}_{ij}\mathbf{P}_j)(\mathbf{H}_{ij}\mathbf{P}_j)^H \qquad (5)$$

The interference covariance matrix (or dispersion matrix) $\mathbf{J}_i$ is a matrix whose element in the $n, m$ position denotes the covariance between the $n^{\text{th}}$ and $m^{\text{th}}$ elements of a $C^{N \times 1}$ dimensional random interference vector. $\mathbf{J}_i$ is a positive definite Hermitian matrix whose eigenvectors show the direction of arrival of interference power towards the receiver and the corresponding eigenvalues represent the amount of power in these directions. Hence, the eigenvector corresponding to the maximum eigenvalue of $\mathbf{J}_i$ represents the direction of arrival of the maximum amount of interference towards the receiver.

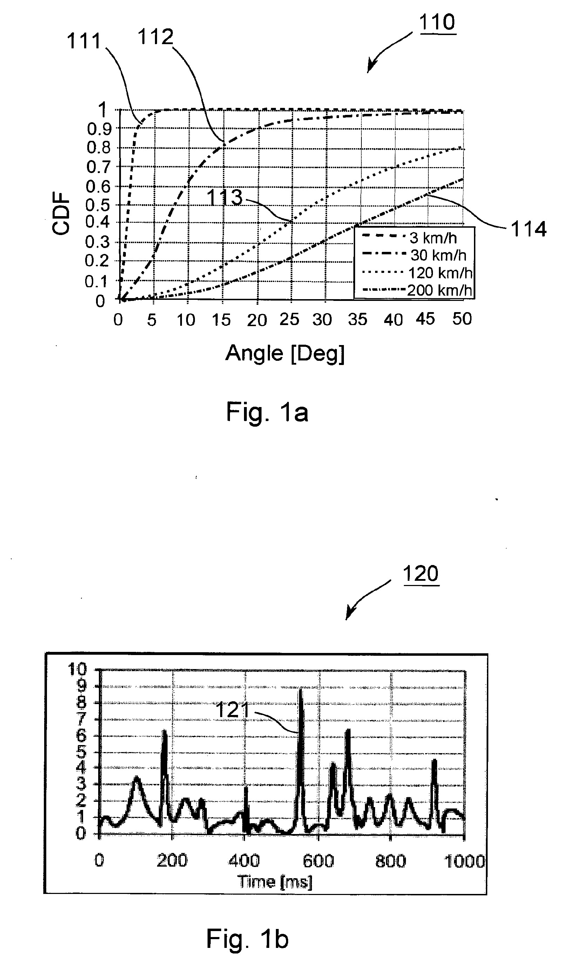

Fig. 1a shows a distribution 110 of an angle between the maximum eigenvectors of $\mathbf{J}_i$ in two consecutive Transmission Time Intervals (TTIs) for a given time-frequency sample for a random position of an $i$-th UE served by the $i$-th BS in an exemplary wireless communication network of 42 BSs. Thereby a TTI refers to the duration of a transmission on the radio link and is related to the size of data blocks passed from the higher network layers to radio link layer. All the BSs are using the well-known eigenmode transmission for single stream towards their desired UEs with uniform power distribution on the antenna elements where both BSs and UEs have two antennas elements, respectively. MIMO eigenmode transmission uses the left and right eigenvectors of the MIMO channel matrix of the wireless MIMO channel between $i$-th UE and $i$-th BS as eigenbeamformers in the receiver (Rx) and transmitter (Tx) respectively to form orthogonal spatial eigenbeams for transmission. It shows that although the interference coming from each cell is a stochastic process the direction of arrival of maximum interference towards the receiver has very low variance. In other words the maximum interference direction is varying very slowly with time if the channels of the UEs are also varying slowly as it is the case for low to moderate speeds of the UE.

Fig. 1a shows various Cumulative Distribution Functions (CDFs), or just distribution functions 111 to 114, of the difference in the direction of arrival of maximum interference for different speeds of the UE. The CDF describes the probability that the random variable "difference in the direction of arrival of maximum interference" with a given probability distribution will be found at a value less than or equal to "Angle". It can be seen that with the increase in the speed (low speed for CDF 111, moderate speed for CDFs 112, 113, and high speed for CDF 114) the difference in the direction of maximum interference also increases. Hence if there are slowly moving users in the network (see CDF 111) and for a set of TTIs the same set of users is scheduled in the network over the same time-frequency samples, then the direction of arrival of the maximum interference for each user will change slowly with time. This effect can also be seen in Fig. 1b which shows the trace 121 of the angle between the eigenvectors for $i$-th UE in a random position for a given time-frequency sample in two consecutive TTIs. The difference in the direction of maximum interference in this example is never above 9°.

After having presented the properties of the overall interference covariance matrix $\mathbf{J}_i$, embodiments of the present invention will now be explained in more detail with reference to Figs 2a to 5b.

Some embodiments are based on a coordination of at least two BSs '$i$' and '$j$' as transmitters in a coordinated base station or transmitter cluster of a wireless communication system. Turning now to Fig. 2a it is schematically illustrated a wireless communication system 200 comprising at least one coordinated base station cluster 210. Each base station cluster 210 comprises a first base station 212-$i$ and at least a second base station 212-$j$. Thereby the first base station 212-$i$ serves or communicates with a first mobile terminal 214-$i$ and the second base station 212-$j$ serves a second mobile terminal 214-$j$. The BSs 212-$i$ and 212-$j$ as well as their associated mobile terminals 214-$i$ and 214-$j$ may be equipped with multiple antennas, hence, leading to MIMO wireless communication channels between the base stations and the mobile terminals. The wireless MIMO channel between the first base station 212-$i$ (abbreviated as BS '$i$') and the first mobile terminal 214-$i$ (abbreviated as UE '$i$') may be represented by an own-channel matrix $\mathbf{H}_{ii}$, while the wireless MIMO channel between the first base station 212-$i$ (abbreviated as BS '$i$') and the second mobile terminal 214-$j$ (abbreviated as UE '$j$') may be represented by a cross-channel or leakage matrix $\mathbf{H}_{ji}$. Likewise, the wireless MIMO channel between the second base station 212-$j$ (abbreviated as BS '$j$') and the second mobile terminal 214-$j$ (abbreviated as UE '$j$') may be represented by an own-channel matrix $\mathbf{H}_{jj}$, while the wireless MIMO channel between the second base station 212-$j$ (abbreviated as BS '$j$') and the first mobile terminal 214-$i$ (abbreviated as UE '$i$') may be represented by a cross-channel or leakage matrix $\mathbf{H}_{ij}$. For example, mutually most interfering base stations or cells may be clustered to form the coordinated cell cluster 210. In other words, the first cell *i* and the second cell *j* may be strongest interferers for each other. Of course, also more than two cells may from a coordinated cluster 210, according to embodiments. Outside the cluster 210 the communication system 200 does not end. Instead, the communication system 200 comprises further out-of-cluster base stations 216 serving further out-of-cluster cells. These further cells may again be arranged to coordinated cell clusters of two or more cells. For the coordinated cluster 210 signals from the out-of-cluster cells 216 pose out-of-cluster interference, i.e. interference coming from cells or base stations 216 outside the cell cluster 210.

Fig. 2b schematically illustrates a block diagram of an embodiment of a transmit precoding apparatus 250 for aligning interference at the first mobile terminal 214-*i* associated to the first base station 212-*i* of the base station cluster 210 of the wireless communication system 200. Although not explicitly shown, it will be understood by the skilled person that the apparatus 250 with its functional blocks is adapted to perform a corresponding transmit precoding method.

The interference alignment or transmit precoding apparatus 250 comprises first processing circuitry 252 operable or adapted to determine or receive a first transmit or interference alignment precoding information 253 based on interference experienced at the second mobile terminal 214-*j* due to interfering signal transmissions reaching the second mobile terminal 214-*j* from the first base station 212-*i* of the base station cluster 210 and from the base stations 216 of the wireless communication system outside the base station cluster 210. The apparatus 250 further comprises second processing circuitry 254 operable or adapted to determine or receive a second transmit or interference alignment precoding information 255 based on a cross-channel state information of a wireless communications channel between the second mobile terminal 214-*j* and the first base station 212-*i*. Yet further, the apparatus 250 comprises an interference alignment or transmit precoder 256 operable to weigh a signal $\mathbf{s}_i$ transmitted from the first base station 212-*i* to the first mobile terminal 214-*i* based on the determined or received first and second transmit precoding information 253, 255. In other words, the transmit precoder 256 may output a precoded transmit signal $\mathbf{x}_i$ by precoding or weighing the input transmit signal (vector) $\mathbf{s}_i$. Hence, the transmit precoder 256 may be operable to determine and/or apply a precoding matrix $\mathbf{P}_i$ to the transmit signal $\mathbf{s}_i$.

According to some embodiments the first processing circuitry 252 may, for example, be operable to determine or receive an overall interference covariance $\mathbf{J}_j$ matrix according to Eq. (6) of the second mobile terminal 214-*j*. The overall interference covariance $\mathbf{J}_j$ matrix may comprise or may be determined based on the cross-channel state information of the wireless communications channel between the second mobile terminal 214-*j* and the first base station 212-*i* of the base station cluster 210 and may comprise or may be determined based on cross-channel state information of wireless communication channels between the second mobile terminal 214-*j* and the base stations 216 of the wireless communication system 200 outside the base station cluster 210. The first transmit precoding information 253 may hence be determined based on the overall interference covariance $\mathbf{J}_j$ matrix comprising in-cluster interference terms as well as out-of-cluster interference terms. In contrast to conventional interference alignment concepts, embodiments hence also account for out-of-cluster interference, i.e. from out-of-cluster base stations 216, in addition to the mutual interference from cells within the coordinated cluster 210.

Having knowledge on the overall interference covariance $\mathbf{J}_j$ matrix, the first processing circuitry 252 may be operable to determine its span, i.e. the subspace that is spanned by $\mathbf{J}_j$. According to embodiments the second processing circuitry 254 may be operable to determine a span of the intra-cluster interference seen at the second mobile terminal 214-*j* from the first base station or cell 212-*i* of the base station cluster 210. Thereby the intra-cluster interference from the first base station or cell 212-*i* to the second mobile terminal 214-*j* may be expressed using $\mathbf{H}_{ji}\mathbf{P}_i$. In this way the transmit precoder 256 may do the precoding, i.e. determine the precoding matrix $\mathbf{P}_i$, such that the overall interference and the intra-cluster interference caused by the first base station 212-*i* are aligned and essentially span the same subspace at the second mobile terminal 214-*j*. That is to say, embodiments of the present invention may align the interference of the coordinated BS to the direction of arrival of total interference (which also includes the interference out of coordination cluster) according to the following conditions:

$$at\, UE\, i: \qquad span(\mathbf{H}_{ij}\mathbf{P}_j) = span(\mathbf{J}_i) \qquad\qquad (7)$$

$$at\, UE\, j: \qquad span(\mathbf{H}_{ji}\mathbf{P}_i) = span(\mathbf{J}_j) \qquad\qquad (8)$$

For single-layer transmission it may be advantageous for practical implementations not to consider the span of the whole overall interference covariance matrix but only the span of one or more dominant eigenvectors thereof. That is to say, one possible and efficient way for the first processing circuitry 252 may be to align the interference of the coordinated BS to the direction of arrival of maximum interference. This may be achieved by determining the precoding matrix $\mathbf{P}_i$, such that at least one eigenvector $\mathbf{j}_j$ corresponding to a maximum eigenvalue of the overall interference covariance matrix $\mathbf{J}_j$ and the intra-cluster interference caused by the first base station 212-*i* are aligned and essentially span the same subspace at the second mobile terminal 214-*j*. That is to say, embodiments of the present invention may align the interference of the coordinated BS to the direction of arrival of maximum overall interference (which includes the interference from out of the coordination cluster) according to the following conditions:

$$at\ UE\ i: \qquad span(\mathbf{H}_{ij}\mathbf{P}_j) = span(\mathbf{j}_i) \qquad\qquad (9)$$

$$at\ UE\ j: \qquad span(\mathbf{H}_{ji}\mathbf{P}_i) = span(\mathbf{j}_j) \qquad\qquad (10)$$

Thereby the at least one eigenvector $\mathbf{j}_j$ of the overall interference covariance matrix $\mathbf{J}_j$ may serve as the first transmit precoding information 253. According to some embodiments also more than one eigenvector of the overall interference covariance matrix $\mathbf{J}_j$ may be determined and used for precoding the input signal $\mathbf{s}_i$ for interference alignment at mobile terminal 214-*j*. This may, for example, be beneficial if there is not exactly one dominant direction of arrival of maximum interference but more than one dominant directions of maximum interference and if there are enough antennas available at the base stations 212 and/or the mobile terminals 214 for signal resolution.

For determining the precoding matrix $\mathbf{P}_i$, the second processing circuitry 254 may be operable to determine, compute or receive an inverse of the cross-channel coefficient matrix $\mathbf{H}_{ji}$ (of elements thereof) representing an interfering Multiple-Input-Multiple-Output (MIMO) wireless communications channel between the second mobile terminal 214-*j* and the first base station 212-*i* of the base station cluster 210. That is to say, in some embodiments $(\mathbf{H}_{ji})^{-1}$ may be regarded as the second transmit precoding information 255. Depending on the dimensions of the MIMO cross-channel matrix $\mathbf{H}_{ji}$ its inverse may also be determined by computing the Moore-Penrose pseudoinverse of $\mathbf{H}_{ji}$.

After having available the at least one eigenvector $\mathbf{j}_j$ corresponding to a maximum eigenvalue of the overall interference covariance matrix $\mathbf{J}_j$ as the first transmit precoding information 253 and the inverse leakage channel $(\mathbf{H}_{ji})^{-1}$ as the second transmit precoding information 255, the transmit precoder 256 for the first base station 212-*i* may determine or compute the precoding matrix $\mathbf{P}_i$ corresponding to

$$\mathbf{P}_i = (\mathbf{H}_{ji})^{-1}\mathbf{j}_j. \qquad\qquad (11)$$

Likewise, a transmit precoder for the second base station 212-*j* of the cluster 210 may determine the precoding matrix $\mathbf{P}_j$ corresponding to

$$\mathbf{P}_j = (\mathbf{H}_{ij})^{-1}\mathbf{j}_i. \qquad\qquad (12)$$

In order to make the first and the second transmit precoding information 253, 255 available at the respective base stations 212-*i* and 212-*j* of the cluster 210, embodiments of the present invention propose a feedback of CSI and/or interference measurements from the mobile terminals 214-*i* and 214-*j* to the base stations 212-*i* and 212-*j* of the cluster 210. For example, mobile terminal 214-*j* could determine (i.e. measure) the overall interference covariance $\mathbf{J}_j$ matrix or the at least one eigenvector $\mathbf{j}_j$ corresponding to a maximum eigenvalue thereof, and provide it to the first base station 212-*i* by feedback to the communication network 200. The same holds for the cross-channel matrix $\mathbf{H}_{ji}$ or its inverse $(\mathbf{H}_{ji})^{-1}$. Quantized or non-quantized feedback information on the two transmit precoding information 253, 255 may be provided either directly or indirectly from the second mobile terminal 214-*j* to the first base station 212-*i* of the cluster 210. That is to say, feedback could be provided from the mobile terminal 214-*j* either directly to the first base station 212-*i*, to the second base station 212-*j*, or to another central entity of the cluster 210. In case of indirect feedback, the second base station 212-*j* could then, for example, provide the required information to the first base station 212-*i* via an inter base station interface, such as the X2-interface. In other embodiments a central entity of the cluster 210 could determine and provide the precoding matrices $\mathbf{P}_i$ and/or $\mathbf{P}_j$ for the respective base stations of the cluster 210.

Hence, embodiments also provide a mobile terminal 214-*i* of a wireless communication system 200, the wireless communication system comprising a base station cluster 210 comprising a first base station 212-*i* and at least a second base station 212-*j*, wherein the first base station 212-*i* serves the mobile terminal 214-*i* and the second base station 212-*j* serves a second mobile terminal 214-*j*. The mobile terminal 214-*i* comprises processing circuitry operable to determine an transmit precoding information 253, 255 based on interference experienced at the mobile terminal 214-*i* due to interfering signal transmissions from at least the second interfering base station 212-*j* of the base station cluster 210 and/or based on interference experienced at the mobile terminal 214-*i* due to interfering signal transmissions from interfering base stations 216 of the wireless communication system 200 outside the base station cluster 210. That is to say, the transmit precoding information determined by the mobile terminal 214-*i* may be indicative of at least the first and/or the second transmit precoding information 253, 255. For example, the transmit precoding information determined by the mobile terminal *i* may comprise the overall interference covariance matrix $\mathbf{J}_i$ or at least one dominant eigenvector $\mathbf{j}_i$ thereof and/or the cross-channel CSI $\mathbf{H}_{ij}$ or the inverse $(\mathbf{H}_{ij})^{-1}$ thereof.

Further, the mobile terminal 214-*i* may comprise a feedback transmitter for providing the transmit precoding information 253, 255 determined by the mobile terminal to a network entity of the cluster 210, such as, for example, the first or the second base station 212-*i*, 212-*j*, or a central processing entity of the cluster 210, which may, for example, centrally compute the precoding matrices for the coordinated base stations 212-*i*, 212-*j*. That is to say, a mobile terminal 214-*i* or 214-*j* may comprise feedback means for delivering its transmit precoding information to the cell cluster 210.

That also implies that the functional blocks 252, 254, and/or 256 of apparatus 250 may either be distributed among a mobile terminal, a base station and/or a central entity of the cluster 210, or they may be co-located with a base station of the coordinated cluster 210. In the latter case embodiments also provide a first base station 212-*i* of a wireless communication system 200, wherein the wireless communication system 200 comprises a coordinated base station cluster 210 comprising the first base station 212-*i* and at least a second base station 212-*j*. The first base station 212-*i* serves a first mobile terminal 214-*i* and the second base station 212-*j* serves a second mobile terminal 214-*j*. The first base station 212-*i* (as well as the second base station 212-*j*) comprises an apparatus 250 according to embodiments of the present invention. The apparatus' first processing circuitry 253 may be operable to receive, from the second base station 212-*j* and/or from the second mobile terminal 214-*j* and/or from a central entity of cluster 210 (i.e. another entity of the cluster 210), information 253, $\mathbf{J}_j$, $\mathbf{j}_j$ on the interference experienced at the second mobile terminal 214-*j*. The apparatus' second processing circuitry 254 may be operable to receive, from the second base station 212-*j* and/or from the second mobile terminal 214-*j* and/or from the central entity of cluster 210, information 255, $\mathbf{H}_{ji}$, or $\mathbf{H}_{ji}^{-1}$ on the cross-channel state information of a wireless communications channel between the second mobile terminal 214-*j* and the first base station 212-*j*. Based on the received information the precoding matrix may be computed and/or applied to the transmit signal.

So far we have not considered any possible timing constraints. However, for performing the interference alignment or transmit precoding for a current (i.e. actual or present) TTI $t_c$ it may be infeasible to obtain current or present first and/or second transmit precoding information 253, 255 corresponding to the current or present TTI $t_c$. For that reason, either both or at least one of the first or second transmit precoding information 253, 255 may correspond to a prior TTI $t_l$ preceding the current TTI $t_c$, therewith relaxing actuality requirements of the respective information. Using transmit precoding information 253 and/or 255 from one or more prior TTIs may be of particular interest in case of rather slowly time variant channel conditions, i.e. for slow to moderate moving users in the network, since it has been shown that statistical properties do not change very much in such cases.

Hence, in some embodiments a UE 214-*j* may measure its interference covariance matrix $\mathbf{J}_i$ or $\mathbf{J}_j$ as given in Eq. (6) in a preceding TTI $t_l$. Each BS 212-*i* in the current TTI $t_c$ (such that $t_c = t_l + C$; with C = 1, 2, ... *N*) may use the previous interference covariance matrix $\mathbf{J}_j$ measured by the UE 214-*j* of the *j-th* BS 212-*j* in the prior TTI $t_l$. Such an approach may, hence, use a delayed version of direction of arrival of maximum interference. Embodiments may align the interference of the coordinated BS to the direction of arrival of maximum interference (which also includes the interference out of coordination cluster 210) corresponding to the following conditions:

$$at\,UE\,j: \qquad span(\mathbf{H}_{ji}^{t_c}\mathbf{P}_i^{t_c}) = span(\mathbf{j}_j^{t_l}), \qquad\qquad (13)$$

$$at\,UE\,i: \qquad span(\mathbf{H}_{ij}^{t_c}\mathbf{P}_j^{t_c}) = span(\mathbf{j}_i^{t_l}) \qquad\qquad (14)$$

Eq. (14) may lead to

$$\mathbf{P}_j^{t_c} = (\mathbf{H}_{ij}^{t_c})^{-1}\mathbf{j}_i^{t_l}, \qquad\qquad (15)$$

where $\mathbf{j}_i^{t_l} \in C^{N\times r_i}$ is the eigenvector of the previous interference covariance matrix $\mathbf{J}_i^{t_l}$ corresponding to its maximum eigenvalue. Similarly, Eq. (13) may lead to

$$\mathbf{P}_i^{t_c} = \left(\mathbf{H}_{ji}^{t_c}\right)^{-1} \mathbf{j}_j^{t_l}. \qquad\qquad (16)$$

That is to say, the first processing circuitry 252 may be operable to determine the first transmit precoding information 253 (e.g. $\mathbf{j}_j^{t_l}$) based on information representing the interference of at least one transmission time interval $t_l$ prior to a current transmission time interval $t_c$ used for communicating between the first base station 212-$i$ and its associated first mobile terminal 214-$i$. In some embodiments the first processing circuitry 252 may be operable to determine the first transmit precoding information 253 (e.g. $\dot{\mathbf{j}}_j^{t_l}$) based on information representing an interference at the second mobile terminal 214-$j$ averaged over a plurality of transmission time intervals prior to the current transmission time interval $t_c$ or averaged over subcarrier frequencies of the current transmission time intervals. In general, the first transmit precoding information 253 may be averaged over a plurality of physical radio resources, such as time, frequency, space, or code (e.g. spreading code). Thereby the average may, for example, be a weighted average, wherein a weight of a past transmit precoding information depends on how far in the past said information has been determined. More actual values may, hence, get a higher weight.

As may be seen from Eqs. (15) and (16), the second processing circuitry 254 may be operable to determine the second transmit precoding information 253 (e.g. $\left(\mathbf{H}_{ji}^{t_c}\right)^{-1}$) based on cross-channel CSI of a current transmission time interval $t_c$ used for communication between the first base station 212-$i$ and its associated first mobile terminal 214-$i$. Also, not only the current transmission time interval may be considered but also radio resources of prior transmission time intervals.

Depending on an implementation the first and/or second processing circuitry 252, 254 may either be found in the first base station 212-$i$, in the second mobile terminal 214-$j$, or in a central processing entity of the cluster 210, which may be coupled to all base stations and mobile terminals of the cluster 210 via wired or wireless interfaces. In this way the central processing entity may have an overall CSI and interference situation knowledge.

As has been described above, embodiments may align coordinated interference with the out of cluster interference. An appropriate receiver, which is able to suppress interference, may suppress the interfering signal in these directions. While this may achieve good results in some particular interference scenarios, it has been found out for other scenarios, that even with the proposed out-of-cluster interference alignment, results may not get substantially better than with conventional precoding schemes. This is because in this way a BS $i$ uses a totally altruistic approach while designing the precoding for its associated UE $i$ and, however, completely neglects the desired signal requirements at its own UE $i$. The approach according to Eqs. (15) and (16) works well in the situations when there is no interference out of the coordination cluster 210, the desired signal does not overlap the interference space due to the highly uncorrelated environment and the signal to noise ratio is very high.

For this reason some embodiments of the present invention modify the expressions in Eqs. (11) and (12) or (15) and (16) by accounting for the desired signal part in each BS $i$ and $j$. According to such embodiments the apparatus 250 may further comprise, as shown in Fig. 2b, third processing circuitry 258 operable to determine a third transmit precoding information 259 based on channel state information of a wireless communications channel between the first mobile terminal 214-$i$ and the first base station 212-$i$. In this case the transmit precoder 256 may be operable to weigh the signal $\mathbf{s}_i$ transmitted from the first base station 212-$i$ to the first mobile terminal 214-$i$ based on the determined first, second, and third transmit precoding information 253, 255, and 259. In other words, the third transmit precoding information 259 may be dependent on the own channel matrix own-channel matrix $\mathbf{H}_{ii}$ corresponding to the MIMO channel between BS $i$ and UE $i$ through which the precoded transmit signal $\mathbf{x}_i$ is conveyed from BS $i$ and UE $i$.

Thus the precoding condition may be defined such that the objective is to improve the ratio of desired signal from BS $i$ to UE $i$ to the degree of interference alignment. Unlike the original scheme as proposed in V.R. Cadambe and S.A. Jafar, "Interference Alignment and Degrees of Freedom of the K-User Interference Channel ", IEEE Trans. Inform. Theory, vol.54, No.8, Aug. 2008, embodiments apply the alignment between the interferer (of cluster 210) in coordination and direction of maximum interference seen at the interfered UE (of cluster 210). In other words, BS '$i$' may try to improve the own signal towards its desired UE '$i$' such that the interference towards the '$j$-th' UE (which is served by the '$j$-th' coordinated BS) is aligned as much as possible to the direction of arrival of maximum interference at '$j$-th' UE.

The expression for $\mathbf{J}_i$ in Eq. (6) tells us that precoding matrices may be required for the calculation which may not yet be available for the current TTI $t_c$. To overcome this problem, embodiments may exploit the characteristics of the interference covariance matrix $\mathbf{J}_i$ or $\mathbf{J}_j$, as explained in detail with reference to Figs. 1a, b, and may make use of a the interference covariance matrix $\mathbf{J}_i^{t_l}$ of a previous TTI $t_l$. For example, using $\mathbf{J}_i^{t_l}$ from the last transmission and the channel information of the current transmission, with the help of matrix projections, the modified precoding matrix for

BS '*i*' for ($r_i$ =1) may be written as,

$$\mathbf{P}_i = \mathbf{H}_{ii}^H \mathbf{H}_{ii} \mathbf{H}_{ji}^{-1} \mathbf{j}_j^{t_i}.$$ (17)

Hence, the third processing circuitry 258 may be operable to determine, as the third transmit precoding information 259, an inner product $\mathbf{H}_{ii}^H \mathbf{H}_{ii}$ of an own channel coefficient matrix $\mathbf{H}_{ii}$ representing an Multiple-Input-Multiple-Output (MIMO) wireless communications channel between the first mobile terminal 214-*i* and the first base station 212-*i* of the base station cluster 210. Again, the third transmit precoding information 259 may be delivered to the first base station 212-*i* by means of CSI feedback from its associated first mobile terminal 214-*i*, for example. For the sake of brevity the index '$t_c$' for the current TTI has been omitted in Eq. (17).

Similarly to Eq. (17), the expression for the '*j-th*' BS precoding may be written as,

$$\mathbf{P}_j = \mathbf{H}_{jj}^H \mathbf{H}_{jj} \mathbf{H}_{ij}^{-1} \mathbf{j}_i^{t_i}.$$ (18)

Hence, according to some embodiments the transmit precoder 256 may be operable to determine a precoding matrix $\mathbf{P}_j^{t_c}$ for precoding a signal vector transmitted from a first base station *j* to its associated first mobile terminal *j* in a current transmission time interval $t_c$ based on Eq. (18), wherein $\mathbf{j}_i^{t_i}$ denotes, as the first transmit precoding information 253, an eigenvector corresponding to the maximum eigenvalue of an interference covariance matrix $\mathbf{J}_i^{t_i}$ determined for the second mobile terminal *i* in at least one transmission time interval $t_l$ prior to the current transmission time interval $t_c$, wherein $\mathbf{H}_{ij}^{-1}$, as the second transmit precoding information 255, corresponds to an inverse cross-channel matrix of the current transmission time interval $t_c$ representing an interfering Multiple-Input-Multiple-Output (MIMO) wireless communications channel between the second mobile terminal *i* and the first base station *j*, and wherein $\mathbf{H}_{jj}^H \mathbf{H}_{jj}$, as the third transmit precoding information 259, corresponds to an inner product of an own channel matrix $\mathbf{H}_{jj}$ of the current transmission time interval $t_c$ representing an Multiple-Input-Multiple-Output (MIMO) wireless communications channel between the first mobile terminal *j* and the first base station *j* of the base station cluster 210.

After having presented embodiments of the inventive interference alignment precoding concept, the latter shall be compared to some state-of-the-art concepts. We consider a state-of-art Coordinated Beamforming (CB) scheme based on a Signal to Leakage and Noise Ratio (SLNR) criterion, see M. Sadek, A. Tarighat, and A. Sayed, "A leakage-based precoding scheme for downlink multi-user MIMO channels," IEEE Trans. Wireless Commun., vol. 6, no. 5, May 2007. There the precoding matrix is designed in such a way that the transmitted signal towards the desired receiver is maximized whereas the interference plus noise effect at the undesired receivers within the same clusters is minimized. The precoding matrix can be derived according to

$$\mathbf{P}_i = \max \xi \left( \left( \sum_{\forall j \in \Omega, j \neq i} \mathbf{H}_{ji} \mathbf{H}_{ji}^H + M\sigma^2 \mathbf{I}_N \right)^{-1} \mathbf{H}_{ii} \mathbf{H}_{ii}^H \right),$$ (19)

where $\mathbf{H}_{ji}$ denotes the channel between the *i*-th BS and the UE served by the *j*-th BS, $\sigma^2$ denotes the noise variance and $\Omega$ denotes the set of indexes of BSs belonging to the same coordinated cluster. We refer to **Fehler! Verweisquelle konnte nicht gefunden werden.**, for further details.

We emphasize that, in general, CB via SLNR is more flexible than the IA with respect to the constraints on the number of BSs in the coordination set. However, here we fix the number of BSs and the data streams per UE for both the schemes then the amount and type of feedback required for the design of their precoders is the same.

We consider the well-known receiver which is based on the Minimum Mean Square Error (MMSE) criterion see J. Winters, "Optimum combining in digital mobile radio with co-channel interference," IEEE Trans. Veh. Technol., vol. 33, no. 3, Aug. 1984) and uses the instantaneous estimation of the interference covariance matrix **J**. This receiver supports any type of transmit schemes because this performs both the interference rejection and signal combining. Especially for embodiments of the present invention this receiver suits because the precoding is based on the estimation of

$$\mathbf{G}_i = \left(\left(\mathbf{J}_i + \sigma^2 \mathbf{I}_N\right)^{-1} \mathbf{H}_{ii} \mathbf{P}_i\right)^H . \qquad (20)$$

In the following we will first we discuss how the CSI may be shared between coordinated BS and then we discuss two types of considered coordination schemes.

All the three coordinated precoding algorithms described above require a certain degree of CSI sharing between the BSs in the same coordination cluster. For conventional IA it is assumed that a logical central unit gathers the channel samples $\mathbf{H}_{ij}$, $\forall i, j \in \Omega$ where $\Omega$ has already been defined as the set of indexes of BSs belonging to a given coordination cluster. This means that the calculation of the conventional IA precoding matrices must be carried out in this logical central unity and cannot be realized using a distributed implementation. For CB via SLNR it is required that the BS $i$ gathers the channel sample $\mathbf{H}_{ji}$, $j \in \Omega$. Based on this information, the precoding matrix design can be realized in a distributed way, without the need of any logical central unit. In other words, each BS is able to calculate its precoding coefficients independently from the other BSs in the coordination cluster. Similarly, in embodiments of the present invention each BS in the coordination cluster is able to design precoding independently. The BS i gathers the channel sample $\mathbf{H}_{ji}$ and $\mathbf{j}_j^{t_s}$, $j \in \Omega$.

We have investigated two different coordination scenarios, referred as *'three-cell coordination'* and *'two-cell coordination'*, shown in Figs. 3a, b, respectively. The conventional IA scheme was proposed and designed for a symmetric/even system. Due to alignment conditions, it can be applied to a certain number of BSs and UEs in coordination. Embodiments of the present invention have been designed for two BS and two UEs in coordination, although it is possible to expand it to more than two BS and two UEs, respectively. The SLNR is a flexible scheme with respect to the number of BSs and UEs in coordination. At first we have considered the *'two-cell coordination' of* Fig. 3a. It is realized by a site (cluster) which is comprises of two BSs that form a coordination cluster. For this case, we have compared embodiments of the present invention with the SLNR based coordinated and a non-coordinated scheme. A second setup consists of the *'three-cell coordination'* of Fig. 3b. It is realized by a site which comprises of three BSs that form a coordination cluster. We have evaluated the conventional IA and other base line schemes for this scenario and also compare them with embodiments of the present invention. In order to avoid border effects, we have evaluated and compared the performance of the central six BSs from both the network scenarios with the considered precoding and receiver schemes. In both cases, CSI sharing and centralized processing comes natural, as BSs belong to the same site. The two network scenarios are shown in Figs. 3a and 3b.

The performance evaluation is based on a C++ system level simulator which is fully 3GPP compliant 3GPP TR 36.814, "Further Advancements for E-UTRA Physical Layer Aspects"). However, in order to provide a fair and clear comparison between the conventional basic IA and embodiments (which employ respectively the fixed predetermined clusters of 3 BSs and 2 BSs), we have used omni-directional antennas instead of sectorized-directional antennas at the BSs. The most important simulation parameters are depicted in the following table:

| TX x RX Antennas | 2x2 |
|---|---|
| Channel Model | Spatial Channel Model, Urban Micro |
| Channel Structure | 600 subcarriers used, subcarrier spacing $\Delta f = 15$ kHz |
| Transmission Layers | 1 |
| Speed | 3 km/h |

During a simulation run several Monte Carlo drops are performed. At the start of a drop, the position of all the UEs is randomly chosen with uniform distribution. Furthermore, the realization of all time and frequency selective spatial channels is calculated according to 3GPP TR 25.996, "Spatial Channel Model for MIMO Simulations". During each drop an event driven simulation is performed with sufficient duration in order to obtain reliable results. All channels are sampled with convenient resolution in frequency and time. The number of transmit layers is set to one. The SINR after the receiver processing is measured for each sample as given in Eq. (16). A Mutual Information Effective SINR Mapping (MIESM) based virtual decoder is used in order to translate the SINR time/frequency samples delivered by the receiver into BLER. The adaptation of Modulation and Coding Schemes (MCS) to the channel quality (link adaptation) is performed ideally, i.e. the decision for a certain MCS is done at the reception time. Just for the sake of comparison and clarity, we have also evaluated the Shannon capacity according to Eq. (19). This helps if extremely high SINR values appear, they would not clip the performance differences between the investigated algorithms when using our virtual decoder, even when choosing the highest possible 64-QAM based MCS with the highest code rate. Perfect channel estimation and instantaneous feedback of CSI without delay to all the BSs in a cluster is assumed. Furthermore, it is also assumed that the feedback is error free.

In the following the performance of the aforementioned coordinated precoding schemes will be described. In addition to that, we have also considered a well-known uncoordinated precoding scheme realized by the transmission into the maximum eigenmode of the channel towards the desired UE. The maximum eigenmode may be calculated from the right singular vectors after the singular value decomposition (SVD) of the channel matrix and therefore this scheme will be referred to as SVD. For all the comparisons we have used the MMSE receiver as described by Eq. (20). The coordinated precoding schemes according to embodiments of the present invention which is named 'DAIA' in Fig. 4 and 'SLNR2' refer to the *'two-cell coordination'* setup, while the 'SLNR3' and 'IA' refer to the *'three-cell coordination'*. 42 BSs have been simulated in each coordination setup and the performance of 6 central BSs is evaluated and in Figs. 4a, b.

Figs. 4a presents the Cumulative Distribution Function (CDF) of the evaluated Signal-to-Interference plus Noise (SINR) values corresponding to the allocated time-frequency resource samples to the UEs present in the central 6 BSs during the whole simulation run. For better visibility, the same results are shown in Fig. 4b with a closer look on the lower SINR region. Note that embodiments of the present invention (labeled with reference numeral 420 and "DAIA" outperform all other baseline precoding schemes in all the SINR regions. It can also be seen that unfortunately the basic IA (labeled with reference numeral 412) is outperformed by all the others even by the uncoordinated SVD labeled with reference numeral 414). This is because the basic IA looses in a cellular network due to its totally altruistic nature.

We know that the maximum degrees of freedom and thus very high performance can be achieved using the conventional basic IA. However, it has been have shown with the help of simulation results that the basic IA is not feasible in large cellular network and is even outperformed by an uncoordinated scheme. Embodiments relate to transmit precoding technique utilizing an interference alignment concept which outperforms the basic IA as well as the other baselines with respect to both the important performance metrics that is spectral efficiency and cell border throughput. This is mainly due to the fact that Embodiments are utilizing both useful signal and interference alignment concept in the calculation of the precoder. Moreover, embodiments are more flexible than basic IA as they do not require all cross channels in the coordination cluster. Additionally, embodiments may inherently use delayed information so that the feedback will have lesser effects.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. An apparatus (250) for precoding a transmit signal, $\mathbf{s}_i$, in a wireless communication system (200), the wireless communication system comprising a transmitter cluster (210) comprising a first transmitter (212-$i$) and at least a second transmitter (212-$j$), wherein the first transmitter (212-$i$) communicates with a first receiver (214-$i$) and the second transmitter (212-$j$) communicates with a second receiver (214-$j$), the apparatus (250) comprising:

   first processing circuitry (252) operable to determine a first transmit precoding information (253) based on interference experienced at the second receiver (214-$j$) due to interfering signal transmissions from at least the first transmitter (212-$i$) of the transmitter cluster (210) and from transmitters (216) of the wireless communication system (200) outside the transmitter cluster (210);
   second processing circuitry (254) operable to determine a second transmit precoding information (255) based on a cross-channel state information of a wireless communications channel between the second receiver (214-$j$) and the first transmitter (212-$i$) of the transmitter cluster (210); and
   a transmit precoder (256) operable to weigh the transmit signal, $\mathbf{s}_i$, transmitted from the first transmitter (212-$i$) to the first receiver (214-$i$) based on the determined first and second transmit precoding information (253; 255).

2. The apparatus (250) according to claim 1, wherein the first processing circuitry (252) is operable to determine, leading to the first transmit precoding information (253), an interference covariance matrix, $\mathbf{J}_j$, based on the cross-channel state information, $\mathbf{H}_{ji}$, of the wireless communications channel between the second receiver (214-$j$) and the first transmitter (212-$i$) of the transmitter cluster (210) and based on cross-channel state information of wireless communication channels between the second receiver (214-$j$) and the transmitters (216) of the wireless communication system (200) outside the transmitter cluster (210).

3. The apparatus (250) according to claim 2, wherein the first processing circuitry (252) is operable to determine, being the first transmit precoding information (253), an eigenvector, $\mathbf{j}_j$, corresponding to a maximum eigenvalue of the interference covariance matrix, $\mathbf{J}_j$.

4. The apparatus (250) according to claim 1, wherein the first processing circuitry (252) is operable to determine the first transmit precoding information (253) based on information representing the interference of at least one transmission time interval ($t_l$) prior to a current transmission time interval, $t_c$, used for communication between the first transmitter (212-$i$) and its associated first receiver (214-i).

5. The apparatus (250) according to claim 4, wherein the first processing circuitry (252) is operable to determine the first transmit precoding information (253) based on information, $\mathbf{J}_j$, $\mathbf{j}_j$, representing an interference at the second receiver (214-$j$) averaged over a plurality of transmission time intervals prior to the current transmission time interval, $t_c$; or averaged a plurality of physical radio resources of the current transmission time interval, $t_c$.

6. The apparatus (250) according to claim 1, wherein the second processing circuitry (254) is operable to determine, being the second transmit precoding information (255), an inverse of a cross-channel coefficient matrix, $\mathbf{H}_{ji}$, representing an interfering Multiple-Input-Multiple-Output, MIMO, wireless communications channel between the second receiver (214-$j$) and the first transmitter (212-$i$) of the transmitter cluster (210).

7. The apparatus (250) according to claim 1, wherein the second processing circuitry (254) is operable to determine the second transmit precoding information (255) based on at least a current transmission time interval, $t_c$, used for communication between the first transmitter (212-*i*) and its associated first receiver (214-*i*).

8. The apparatus (250) according to claim 1, wherein the transmit precoder (256) is operable to determine a precoding matrix, $\mathbf{P}_i$, for precoding a signal vector, $\mathbf{s}_i$, transmitted from the first transmitter (212-*i*) to the first receiver (214-*i*) corresponding to

$$\mathbf{P}_i = \mathbf{H}_{ji}^{-1}\mathbf{j}_j,$$

wherein $\mathbf{j}_j$ denotes, being the first transmit precoding information (253), an eigenvector corresponding to the maximum eigenvalue of an overall interference covariance matrix

$$\mathbf{J}_j = \sum_{\forall i; j \neq i} (\mathbf{H}_{ji}\mathbf{P}_i)(\mathbf{H}_{ji}\mathbf{P}_i)^H$$

determined for the second receiver (214-j), and
wherein $\mathrm{H}_{ji}^{-1}$, being the second transmit precoding information (255), corresponds to an inverse cross-channel matrix, $\mathbf{H}_{ji}$, representing an interfering Multiple-Input-Multiple-Output, MIMO, wireless communications channel between the second receiver (214-*j*) and the first transmitter (212-*i*).

9. The apparatus (250) according to claim 1, further comprising:

third processing circuitry (258) operable to determine a third transmit precoding information (259) based on channel state information of a wireless communications channel between the first receiver (214-*i*) and the first transmitter (212-*i*); and
wherein the transmit precoder (256) is operable to weigh the transmit signal, $\mathbf{s}_i$, transmitted from the first transmitter (212-*i*) to the first receiver (214-*i*) based on the determined first, second, and third transmit precoding information (253; 255; 259).

10. The apparatus (250) according to claim 9, wherein the third processing circuitry (258) is operable to determine, as the third transmit precoding information (259), an inner product of an own channel coefficient matrix, $\mathbf{H}_{ii}$, representing an Multiple-Input-Multiple-Output, MIMO, wireless communications channel between the first receiver (214-*i*) and the first transmitter (212-*i*) of the transmitter cluster (210).

11. The apparatus (250) according to claim 9, wherein the transmit precoder (256) is operable to determine a precoding matrix, $\mathbf{P}_i$, for precoding a signal vector, $\mathbf{s}_i$, transmitted from the first transmitter (212-*i*) to the first receiver (214-*i*) corresponding to

$$\mathbf{P}_i = \mathbf{H}_{ii}^H \mathbf{H}_{ii} \mathbf{H}_{ji}^{-1} \mathbf{j}_j,$$

wherein $\mathbf{j}_j$ denotes, being the first transmit precoding information (253), an eigenvector corresponding to the maximum eigenvalue of an overall interference covariance matrix

$$\mathbf{J}_j = \sum_{\forall i; j \neq i} (\mathbf{H}_{ji}\mathbf{P}_i)(\mathbf{H}_{ji}\mathbf{P}_i)^H$$

determined for the second receiver (214-j),
wherein $\mathbf{H}_{ji}^{-1}$, being the second transmit precoding information (255), corresponds to an inverse cross-channel matrix ($\mathbf{H}_{ji}$) representing an interfering Multiple-Input-Multiple-Output, MIMO, wireless communications channel between the second receiver (214-*j*) and the first transmitter (212-i), and

wherein $\mathbf{H}_{ii}^{H}\mathbf{H}_{ii}$ , being the third transmit precoding information (259), corresponds to an inner product of an own channel matrix, $\mathbf{H}_{ii}$ representing an Multiple-Input-Multiple-Output, MIMO, wireless communications channel between the first receiver (214-*i*) and the first transmitter (212-*i*) of the transmitter cluster (210).

**12.** A first transmitter (212-*i*) of a wireless communication system (200), the wireless communication system (200) comprising a transmitter cluster (210) comprising the first transmitter (212-*i*) and at least a second transmitter (212-*j*), wherein the first transmitter (212-*i*) communicates with a first receiver (214-*i*) and the second transmitter (212-*j*) communicates with a second receiver (214-*j*), the first transmitter (212-*i*) comprising an apparatus (250) according to claim 1, wherein the first processing circuitry (253) is operable to receive, from the second transmitter (212-*j*) and/or from the second receiver (214-*j*), information (253, $\mathbf{J}_j$; $\mathbf{j}_j$, on the interference experienced at the second receiver (214-*j*) due to interfering signal transmissions from at least the first transmitter (212-*i*) of the transmitter cluster (210) and from further transmitters (216) of the wireless communication system (200) outside the transmitter cluster (210), and wherein the second processing circuitry (254) is operable to receive, from the second transmitter (212-*j*) and/or from the second receiver (214-*j*), information (255, $\mathbf{H}_{ji}$; $\mathbf{H}_{ji}^{-1}$, on the cross-channel state information of a wireless communications channel between the second receiver (214-*j*) and the first transmitter (212-*j*).

**13.** A receiver (214-*j*) of a wireless communication system (200), the wireless communication system (200) comprising a transmitter cluster (210) comprising a first transmitter (212-*j*) and at least a second transmitter (212-*i*), wherein the first transmitter (212-*j*) communicates with the receiver (214-*j*) and the second transmitter (212-*i*) communicates with a second receiver (214-*i*), the receiver (214-*j*) comprising:

processing circuitry operable to determine an transmit precoding information (253; 255; $\mathbf{H}_{ji}$; $\mathbf{H}_{ji}^{-1}$), $\mathbf{J}_j$; $\mathbf{j}_j$; based on interference experienced at the receiver (214-*j*) due to interfering signal transmissions from at least the second interfering transmitter (212-*i*) of the transmitter cluster (210) and/or based on interference experienced at the receiver (214-*j*) due to interfering signal transmissions from further interfering transmitters (216) of the wireless communication system (200) outside the transmitter cluster (210), and
a feedback transmitter operable to transmit the determined transmit precoding information (253; 255; $\mathbf{H}_{ji}$; $\mathbf{H}_{ji}^{-1}$; $\mathbf{J}_j$; $\mathbf{j}_j$) to at least one network entity of the transmitter cluster (210).

**14.** A method for precoding a transmit signal, $\mathbf{s}_i$, in a wireless communication system (200), the wireless communication system comprising a transmitter cluster (210) comprising a first transmitter (212-*i*) and at least a second transmitter (212-*j*), wherein the first transmitter (212-*i*) communicates with a first receiver (214-*i*) and the second transmitter (212-*j*) communicates with a second receiver (214-*j*), the method comprising:

determining a first transmit precoding information (253) based on interference experienced at the second receiver (214-*j*) due to interfering signal transmissions from at least the first transmitter (212-*i*) of the transmitter cluster (210) and from transmitters (216) of the wireless communication system (200) outside the transmitter cluster (210);
determining a second transmit precoding information (255) based on a cross-channel state information of a wireless communications channel between the second receiver (214-*j*) and the first transmitter (212-*i*) of the transmitter cluster (210); and
precoding the transmit signal, $\mathbf{s}_i$, transmitted from the first transmitter (212-*i*) to the first receiver (214-*i*) based on the determined first and second transmit precoding information (253; 255).

**15.** A computer program having a program code for performing the method of claim 14, when the computer program is executed on a computer or processor.

**Patentansprüche**

**1.** Vorrichtung (250) zur Vorcodierung eines Sendesignals, $\mathbf{s}_i$, in einem drahtlosen Kommunikationssystem (200), wobei das drahtlose Kommunikationssystem einen Sender-Cluster (210) mit einem ersten Sender (212-*i*) und mindestens einem zweiten Sender (212-*j*) umfasst, wobei der erste Sender (212-*i*) mit einem ersten Empfänger (214-*i*) kommuniziert und der zweite Sender (212-*j*) mit einem zweiten Empfänger (214-*j*) kommuniziert, wobei die Vorrichtung (250) umfasst:

Einen ersten Verarbeitungsschaltkreis (252), welcher betreibbar ist, um eine erste Sende-Vorcodierungsinformation (253) auf der Basis von durch Störsignalübertragungen von zumindest dem ersten Sender (212-*i*) des Sender-Clusters (210) und von Sendern (216) des drahtlosen Kommunikationssystems (200) außerhalb des Sender-Clusters (210) an dem zweiten Empfänger (214-*j*) auftretenden Störungen zu ermitteln; einen zweiten Verarbeitungsschaltkreis (254), welcher betreibbar ist, um eine zweite Sende-Vorcodierungsinformation (255) auf der Basis einer kanalübergreifenden Zustandsinformation eines drahtlosen Kommunikationskanals zwischen dem zweiten Empfänger (214-*j*) und dem ersten Sender (212-*i*) des Sender-Clusters (210) zu ermitteln; und

einen Sende-Vorcodierer (256), welcher betreibbar ist, um das von dem ersten Sender (212-*i*) an den ersten Empfänger (214-*i*) übertragene Sendesignal, s$_i$, auf der Basis der ermittelten ersten und zweiten Vorcodierungsinformation (253; 255) zu gewichten.

2. Vorrichtung (250) nach Anspruch 1, wobei der erste Verarbeitungsschaltkreis (252) betreibbar ist, um auf der Basis der kanalübergreifenden Zustandsinformation, $\mathbf{H}_{ji}$, des drahtlosen Kommunikationskanals zwischen dem zweiten Empfänger (214-*j*) und dem ersten Sender (212-*i*) des Spender-Clusters (210) und auf der Basis der kanalübergreifenden Zustandsinformation von drahtlose Kommunikationskanälen zwischen dem zweiten Empfänger (214-*j*) und den Sendern (216) des drahtlosen Kommunikationssystems (200) außerhalb des Sender-Clusters (210) eine Störungs-Kovarianzmatrix, $\mathbf{J}_j$, welche zu der ersten Sende-Vorcodierungsinformation (253) führt, zu ermitteln.

3. Vorrichtung (250) nach Anspruch 2, wobei der erste Verarbeitungsschaltkreis (252) betreibbar ist, um als die erste Sende-Vorcodierungsinformation (253), einen Eigenvektor, $\mathbf{j}$, welcher einem maximalen Eigenwert der Störungs-Kovarianzmatrix, $\mathbf{J}_j$, entspricht, zu ermitteln.

4. Vorrichtung (250) nach Anspruch 1, wobei der erste Verarbeitungsschaltkreis (252) betreibbar ist, um die erste Sende-Vorcodierungsinformation (253) auf der Basis von Informationen, welche die Störung mindestens eines Sendezeitintervalls ($t_l$) vor einem momentanen Sendezeitintervall, $t_c$, welches für die Kommunikation zwischen dem ersten Sender (212-*i*) und seinem assoziierten ersten Empfänger (214-*i*) genutzt wird, darstellen, zu vermitteln.

5. Vorrichtung (250) nach Anspruch 4, wobei der erste Verarbeitungsschaltkreis (252) betreibbar ist, um die erste Sende-Vorcodierungsinformation (253) auf der Basis von Informationen, $\mathbf{J}_j$, $\mathbf{j}_j$, welche die Störung an dem zweiten Empfänger (214-*j*), gemittelt über eine Vielzahl von Sendezeitintervallen hinweg, vor dem momentanen Sendezeitintervall, $t_c$, oder gemittelt über eine Vielzahl von physischen Funkressourcen des momentanen Sendezeitintervalls, $t_c$, hinweg, darstellen, zu ermitten.

6. Vorrichtung (250) nach Anspruch 1, wobei der zweite Verarbeitungsschaltkreis (254) betreibbar ist, um als die zweite Sende-Vorcodierungsinformation (255) eine Inverse einer kanalübergreifenden Koeffizientenmatrix, $\mathbf{H}_{ji}$, welche einen störenden drahtlosen Mehrfacheingangs- und Mehrfachausgangs- bzw. MIMO-Kommunikationskanal zwischen dem zweiten Empfänger (214-*j*) und dem ersten Sender (212-*i*) des Sender-Clusters (210) darstellt, zu ermitteln.

7. Vorrichtung (250) nach Anspruch 1, wobei der zweite Verarbeitungsschaltkreis (254) betreibbar ist, um die zweite Sende-Vorcodierungsinformation (255) auf der Basis mindestens eines momentanen Sendezeitintervalls, $t_c$, welches für die Kommunikation zwischen dem ersten Sender (212-*i*) und seinem assoziierten ersten Empfänger (214-*i*) genutzt wird, zu ermitteln.

8. Vorrichtung (250) nach Anspruch 1, wobei der Sende-Vorcodierer (256) betreibbar ist, um eine Vorcodierungsmatrix, $\mathbf{P}_i$, für die Vorcodierung eines von dem ersten Sender (212-i) an den ersten Empfänger (214-i) übertragenen Signalvektors, s$_i$, zu ermitteln, welche

$$\mathbf{P}_i = \mathbf{H}_{ji}^{-1} \mathbf{j}_j \text{ entspricht,}$$

wobei $\mathbf{j}_j$ als die erste Sende-Vorcodierungsinformation (253) einen Eigenvektor bezeichnet, welcher dem maximalen Eigenwert einer für den zweiten Empfänger (214-j) ermittelten Gesamtstörungs-Kovarianzmatrix

$$\mathbf{J}_j = \sum (\mathbf{H}_{ji}\mathbf{P}_i)(\mathbf{H}_{ji}\mathbf{P}_i)^H$$
$$\forall i, j \neq i$$

entspricht, und

wobei $H_{ji}^{-1}$ als die zweite Sende-Vorcodierungsinformation (255) einer inversen kanalübergreifenden Matrix, $H_{ji}$, entspricht, welche einen störenden drahtlosen Mehrfacheingangs- und Mehrfachausgangs- bzw. MIMO-Kommunikationskanal zwischen dem zweiten Empfänger (214-j) und dem ersten Sender (212-i) darstellt,

9. Vorrichtung (250) nach Anspruch 1, weiterhin umfassend:

Einen dritten Verarbeitungsschaltkreis (258), welcher betreibbar ist, um eine dritte Sende-Vorcodierungsinformation (259) auf der Basis einer kanalübergreifenden Zustandsinformation eines drahtlosen Kommunikationskanals zwischen dem ersten Empfänger (214-i) und dem ersten Sender (212-i) zu ermitteln; und
wobei der Sende-Vorcodierer (256) betreibbar ist, um das von dem ersten Sender (212-i) an den ersten Empfänger (214-i) übertragene Sendesignal, $s_i$, auf der Basis der ermittelten ersten, zweiten und dritten Vorcodierungsinformationen (253; 255; 259) zu gewichten.

10. Verfahren (250) nach Anspruch 9, wobei der dritte Verarbeitungsschaltkreis (258) betreibbar ist, um als die dritte Sende-Vorcodierungsinformation (259) ein inneres Produkt einer eigenen Kanalkoefiizientenmatrix, $H_{ji}$, welche einen drahtlosen Mehrfacheingangs- und Mehrfachausgangs- bzw. MIMO-Kommunikationskanal zwischen dem ersten Empfänger (214-j) und dem ersten Sender (212-i) des Sender-Clusters (210) darstellt, zu ermitteln.

11. Vorrichtung (250) nach Anspruch 9, wobei der Sende-Vorcodierer (256) betreibbar ist, um eine Vorcodierungsmatrix, $P_i$, für die Vorcodierung eines von dem ersten Sender (212-i) an den ersten Empfänger (214-i) übertragenen Signalvektors, $s_i$, zu ermitteln, welche

$$P_i = H_{ji}^{H} H_{ji} H_{ji}^{-1} j_i \text{ entspricht,}$$

wobei $j_j$ als die erste Sende-Vorcodierungsinformation (253) einen Eigenvektor bezeichnet, welcher dem maximalen Eigenwert einer für den zweiten Empfänger (214-j) ermittelten Gesamtstörungs-Kovarianzmatrix

$$J_j = \sum_{\forall i;\, j \neq i} (H_{ji} P_i)(H_{ji} P_i)^{H}$$

entspricht,
wobei $H_{ji}^{-1}$ als die zweite Sende-Vorcodierungsinformation (255) einer inversen kanalübergreifenden Matrix, $H_{ji}$, entspricht, welche einen störenden drahtlosen Mehrfacheingangs- und Mehrfachausgangs- bzw. MIMO-Kommunikationskanal zwischen dem zweiten Empfänger (214-j) und dem ersten Sender (212-i) darstellt, und
wobei $H_{ji}^{H} H_{ji}$ als die dritte Sende-Vorcodierungsinformation (259) einem inneren Produkt einer eigenen Kanalmatrix, $H_{ji}$, entspricht, welche einen drahtlosen Mehrfacheingangs- und Mehrfachausgangs- bzw. MIMO-Kommunikationskanal zwischen dem ersten Empfänger (214-j) und dem ersten Sender (212-i) des Sender-Clusters (210) darstellt

12. Erster Sender (212-i) eines drahtlosen Kommunikationssystems (200), wobei das drahtlose Kommunikationssystem (200) einen Sender-Cluster (210) mit einem ersten Sender (212-i) und mindestens einem zweiten Sender (212-j) umfasst, wobei der erste Sender (212-i) mit einem ersten Empfänger (214-i) kommuniziert und der zweite Sender (212-j) mit einem zweiten Empfänger (214-j) kommuniziert, wobei der erste Sender (212-i) eine Vorrichtung (250) gemäß Anspruch 1 umfasst, wobei der erste Verarbeitungsschaltkreis (252) betreibbar ist, um von dem zweiten Sender (212-j) und/oder von dem zweiten Sender (214-j) Informationen (253), $J_j$; $j_j$, über die an dem zweiten Empfänger (214-j) aufgrund von Störsignalübertragungen von zumindest dem ersten Sender (212-i) des Sender-Clusters (210) und von weiteren Sendern (216) des drahtlosen Kommunikationssystems außerhalb des Sender-Clusters (210) aufgetretenen Störungen zu empfangen, und wobei der zweite Verarbeitungsschaltkreis (254) betreibbar ist, um von dem zweiten Sender (212-j) und/oder von dem zweiten Empfänger (214-j) Informationen (255), $H_{ji}$; $H_{ji}^{-1}$, über die kanalübergreifende Zustandsinformation eines drahtlosen Kommunikationskanals zwischen dem zweiten Empfänger (214-j) und dem ersten Sender (212-j) zu empfangen.

13. Empfangen (214-j) eines drahtlosen Kommunikationssystems (200), wobei das drahtlose Kommunikationssystem (200) einen Sender-Cluster (210) mit einem ersten Sender (212-i) und mindestens einem zweiten Sender (212-j)

umfasst, wobei der erste Sender (212-*i*) mit dem Empfänger (214-*i*) kommuniziert und der zweite Sender (212-*j*) mit einem zweiten Empfänger (214-*j*) kommuniziert, wobei der Empfänger (214-*j*) umfasst:

Einen Verarbeitungsschaltkreis, welcher betreibbar ist, um eine Sende-Vorcodierungsinformation (253; 255; $\mathbf{H}_{ji}$; $\mathbf{H}_{ji}^{-1}$, $\mathbf{J}_j$; $\mathbf{j}_j$) auf der Basis einer an dem Empfänger (214-*j*) aufgrund von Störsignalübertragungen von zumindest dem zweiten Störsender (212-*i*) des Sender-Clusters (210) und/oder auf der Basis einer an dem Empfänger (214-*j*) aufgrund von Störsignalübertragungen von weiteren Störsendern des drahtlosen Kommunikationssystems (200) außerhalb des Sender-Clusters (210) ausgetretenen Störung zu ermittel, und
einen Rückmeldesender, welcher betreibbar ist, um die ermittelte Sende-Vorcodierungsinformation (253; 255; $\mathbf{H}_{ji}$; $\mathbf{H}_{ji}^{-1}$, $\mathbf{J}_j$; $\mathbf{j}_j$) an zumindest eine Netzwerkentität des Sender-Clusters (210) zu über**t**ragen.

14. Verfahren zur Vorcodierung eines Sendesignals, $\mathbf{s}_i$, in einem drahtlosen Kommunikationssystem (200), wobei das drahtlose Kommunikationssystem einen Sender-Cluster (210) mit einem ersten Sender (212-*i*) und mindestens einem zweiten Sender (212-*j*) umfasst, wobei der erste Sender (212-*i*) mit einem ersten Empfänger (214-*i*) kommuniziert und der zweite Sender (212-*j*) mit einem zweiten Empfänger (214-*j*) kommuniziert, wobei das Verfahren umfasst:

Ermitteln einer ersten Sende-Vorcodierungsinformation (253) auf der Basis einer an dem zweiten Empfänger (214-*j*) aufgrund von Störsignalübertragungen von mindestens dem ersten Sender (212-*i*) des Sender-Clusters (210) und von Sendern (216) des drahtlosen Kommunikationssystems (200) außerhalb des Sender-Clusters (210) aufgetretenen Störung;
Ermitteln einer zweiten Sende-Vorcodierungsinformation (255) auf der Basis einer kanalübergreifenden Zustandsinformation eines drahtlosen Kanals zwischen dem zweiten Empfänger (214-*j*) und dem ersten Sender (212-*i*) des Spender-Clusters 210); und
Vorcodieren des von dem ersten Sender (212-*i*) an den ersten Empfänger (214-*i*) übertragenen Sendesignals auf der Basis der ermittelten ersten und zweiten Sende-Vorcodierungsinformation (253; 255).

15. Computerprogramm mit einem Programmcode zum Durchführen des Verfahrens gemäß Anspruch 14, wenn das Computerprogramm auf einem Computer oder Prozessor ausgeführt wird.

**Revendications**

1. Appareil (250) de précodage d'un signal d'émission, $\mathbf{s}_i$, dans un système de communication sans fil (200), le système de communication sans fil comprenant une grappe émettrice (210) comprenant un premier émetteur (212-*i*) et au moins un deuxième émetteur (212-*j*), dans lequel le premier émetteur (212-*i*) communique avec un premier récepteur (214-*i*) et le deuxième émetteur (212-*j*) communique avec un deuxième récepteur (214-*j*), l'appareil (250) comprenant :

des premiers circuits de traitement (252) permettant de déterminer des premières informations de précodage d'émission (253) sur la base d'interférences subies au niveau du deuxième récepteur (214-*j*) en raison d'émissions de signaux brouilleurs au moins à partir du premier émetteur (212-*i*) de la grappe émettrice (210) est à partir d'émetteurs (216) du système de communication sans fil (200) à l'extérieur de la grappe émettrice (210) ;
des deuxièmes circuits de traitement (254) permettant de déterminer des deuxièmes informations de précodage d'émission (255) sur la base d'informations d'états de canaux croisés d'un canal de communication sans fil entre le deuxième récepteur (214-*j*) et le premier émetteur (212-*i*) de la grappe émettrice (210) ; et
un précodeur d'émission (256) permettent de pondérer le signal d'émission, $\mathbf{s}_i$, émis à partir du premier émetteur (212-*i*) vers le premier récepteur (214-*i*) sur la base des premières et deuxièmes informatisons de précodage d'émission déterminée (253 ; 255).

2. Appareil (250) selon la revendication 1, dans lequel les premiers circuits de traitement (252) permettant de déterminer, ce qui donne les premières informations de précodage d'émission (253), une matrice de covariance d'interférence, $\mathbf{J}_j$, sur la base des informatisons d'états de canaux croisés, $\mathbf{H}_{ji}$, du canal de communication sans fil entre le deuxième récepteur (214-*j*) et le premier émetteur (212-*i*) de la grappe émettrice (210) et sur la base des informations d'états de canaux croisés de canaux de communication sans fil entre le deuxième récepteur (214-*j*) et les émetteurs (216) du système de communication sans fil (200) à l'extérieur de la grappe émettrice (210).

3. Appareil (250) selon la revendication 2, dans lequel les premiers circuits de traitement (252) permettent de déterminer, en tant que premières informations de précodage d'émission (253), un vecteur propre, $\mathbf{j}_j$, correspondant à une valeur propre maximale de la matrice de covariance d'interférence, $\mathbf{J}_j$.

4. Appareil (250) selon la revendication 1, dans lequel les premiers circuits de traitement (252) permettent de déterminer les premières informations de précodage d'émission (253) sur la base d'informations représentant l'interférence d'au moins un intervalle de temps d'émission ($t_i$) avant un intervalle de temps d'émission actuel, $t_c$, servant à la communication entre le premier émetteur (212-$i$) et son premier récepteur associé (214-$i$).

5. Appareil (250) selon la revendication 4, dans lequel les premiers circuits de traitement (252) permettent de déterminer les premières informations de précodage d'émission (253) sur la base d'informations, $\mathbf{J}_j$ ; $j_j$, représentant une interférence au niveau du deuxième récepteur (214-$j$) dont la moyenne a été calculée sur une pluralité d'intervalles de temps d'émission avant l'intervalle de temps d'émission actuel, $t_c$, ou sur une pluralité de ressources radio physiques de l'intervalle de temps d'émission actuel, $t_c$.

6. Appareil (250) selon la revendication 1, dans lequel les deuxièmes circuits de traitement (254) permettent de déterminer, en tant que deuxièmes informations de précodage d'émission (255), une inversion d'une matrice de coefficients de canaux croisés, $\mathbf{H}_{ji}$, représentent un canal de communication sans fil entrées-multiples-sorties-multiples, MIMO, de brouillage entre le deuxième récepteur (214-$j$) et le premier émetteur (212-$i$) de la grappe émettrice (210).

7. Appareil (250) selon la revendication 1 dans lequel les deuxièmes circuits de traitement (254) permettant de déterminer les deuxièmes informations de précodage d'émission (255) sur la base d'au moins un intervalle de temps d'émission actuel, $t_c$, servant à la communication entre le premier émetteur (212-$i$) et son premier récepteur associé (214-$i$).

8. Appareil (250) selon la revendication 1, dans lequel le précodeur d'émission (256) permet de déterminer une matrice de précodage, $\mathbf{P}_i$, pour précoder un vecteur de signal, $\mathbf{s}_i$, émis à partir du premier émetteur (212-$i$) vers le premier récepteur (214-$i$) correspondent à

$$\mathbf{P}_i = \mathbf{H}_{ji}^{-1} \, \mathbf{j}_j,$$

où $\mathbf{j}_j$ désigne, en tant que premières informations de précodage d'émission (253), un vecteur propre correspondant à la valeur propre maximale d'une matrice de covariance d'interférence générale

$$\mathbf{J}_j = \sum_{\forall i; j \neq i} (\mathbf{H}_{ji}\mathbf{P}_i)(\mathbf{H}_{ji}\mathbf{P}_i)^H$$

déterminée pour le deuxième récepteur (214-$j$), et
où $\mathbf{H}_{ji}^{-1}$, en tant que deuxièmes informations de précodage d'émission (255), correspond à une matrice de canaux croisés inversée, $\mathbf{H}_{ji}$, représentant un canal de communication sans fil entrées-multiples-sorties-multiples, MIMO, de brouillage entre le deuxième récepteur (214-$j$) et le premier émetteur (212-$i$).

9. Appareil (250) selon la revendication 1, comprenant en outre :

des troisièmes circuits de traitement (258) permettant de déterminer des troisièmes informations de précodage d'émission (259) sur la base d'informatisons d'états de canaux d'un canal de communication sans fil entre le premier récepteur (214-$i$) et le premier émetteur (212-$i$) ; et
dans lequel le précodeur d'émission (256) permet de pondérer le signal d'émission, $\mathbf{s}_i$, émis à partir du premier émetteur (212-$i$) vers le premier récepteur (214-$i$) sur la base des premières, deuxièmes et troisièmes informations de précodage d'émission déterminées (253 ; 255 ; 259).

10. Appareil (250) selon la revendication 9, dans lequel les troisièmes circuits de traitement (258) permettant de déterminer, en tant que troisièmes informations de précodage d'émission (259), un produit intérieur d'une matrice de coefficients à canal propre, $\mathbf{H}_{ii}$, représentant un canal de communication sans fil entrées-multiples-sorties-multiples, MIMO, entre le premier récepteur (214-*i*) et le premier émetteur (212-*i*) de la grappe émettrice (210).

**11.** Appareil (250) selon la revendication 9, dans lequel le précodeur d'émission (256) permet de déterminer une matrice de précodage, **P**$_i$, pour précoder un vecteur de signal, **s**$_i$, émis à partir du premier émetteur (212-*i*) vers le premier récepteur (214-*i*) correspondant à

$$\mathbf{P}_i = \mathbf{H}_{ii}^H \mathbf{H}_{ii} \mathbf{H}_{ji}^{-1} \mathbf{j}_j \, ,$$

où **j**$_j$ désigne, en tant que premières informations de précodage d'émission (253), un vecteur propre correspondant à la valeur propre maximale d'une matrice de covariance d'interférence générale

$$\mathbf{J}_j = \sum_{\forall i; j \neq i} (\mathbf{H}_{ji} \mathbf{P}_i)(\mathbf{H}_{ji} \mathbf{P}_i)^H$$

déterminée pour le deuxième récepteur (214-*j*),

où **H**$_{ji}^{-1}$, en tant que deuxièmes informations de précodage d'émission (255), correspond à une matrice de canaux croisés inversée (**H**$_{ji}$) représentant un canal de communication sans fil entrées-multiples-sorties-multiples, MIMO, de brouillage entre le deuxième récepteur (214-*j*) et le premier émetteur (212-*i*), et

où $\mathbf{H}_{ii}^H \mathbf{H}_{ii}$, en tant que troisièmes informations de précodage d'émission (259), correspond à un produit intérieur d'une matrice à canal propre, **H**$_{ii}$, représentant un canal de communication sans fil entrées-multiples-sorties-multiples, MIMO, entre le premier récepteur (214-*i*) et le premier émetteur (212-*i*) de la grappe émettrice (210).

**12.** Premier émetteur (212-*i*) d'un système de communication sans fil (200), le système de communication sans fil (200) comprenant une grappe émettrice (210) comprenant le premier émetteur (212-*i*) et au moins un deuxième émetteur (212-*j*), le premier émetteur (212-*i*) communiquant avec un premier récepteur (214-*i*) et le deuxième émetteur (212-*j*) communiquant avec un deuxième récepteur (214-*j*), le premier émetteur (212-*i*) comprenant un appareil (250) selon la revendication 1, dans lequel les premiers circuits de traitement (253) permettent de recevoir, à partir du deuxième émetteur (212-*j*) et/ou à partir du deuxième récepteur (214-*j*), des informations (253), **J**$_j$; **j**$_j$, sur les interférences subies au niveau du deuxième récepteur (214-*j*) en raison d'émissions de signaux brouilleurs au moins à partir du premier émetteur (212-*i*) de la grappe émettrice (210) et à partir d'autres émetteurs (216) du système de communication sans fil (200) à l'extérieur de la grappe émettrice (210), et dans lequel les deuxièmes circuits de traitement (254) permettent de recevoir, à partir du deuxième émetteur (212-*j*) et/ou à partir du deuxième récepteur (214-*j*), des informations (255), **H**$_{ji}$; **H**$_{ji}^{-1}$, sur les informations d'états de canaux croisés d'un canal de communication sans fil entre le deuxième récepteur (214-*j*) et le premier émetteur (212-*j*).

**13.** Récepteur (214-*j*) d'un système de communication sans fil (200), le système de communication sans fil (200) comprenant une grappe émettrice (210) comprenant un premier émetteur (212-*j*) et au moins un deuxième émetteur (212-*i*), dans lequel le premier émetteur (212-*j*) communique avec le récepteur (214-*j*) et le deuxième émetteur (212-*i*) communique avec un deuxième récepteur (214-*i*), le récepteur (214-*j*) comprenant :

des circuits de traitement permettant de déterminer des informatisons de précodage d'émission (253 ; 255 ; **H**$_{ji}$, **H**$_{ji}^{-1}$), **J**$_j$; **j**$_j$. sur la base d'interférences subies au niveau du récepteur (214-*j*) en raison d'émissions de signaux brouilleurs au moins à partir du deuxième émetteur brouilleur (212-*i*) de la grappe émettrice (210) et/ou sur la base d'interférences subies au niveau du récepteur (214-*j*) en raison d'émissions de signaux brouilleurs à partir d'autres émetteurs brouilleurs (216) du système de communication sans fil (200) à l'extérieur de la grappe émettrice (210), et
un émetteur de rétroaction permettant d'émettre les informations de précodage d'émission déterminées (253 ; 255; **H**$_{ji}$; **H**$_{ji}^{-1}$; **J**$_j$; **j**$_j$) vers au moins une entité de réseau de la grappe émettrice (210).

**14.** Procédé de précodage d'un signal d'émission, **s**$_i$, dans un système de communication sans fil (200), le système de communication sans fil comprenant une grappe émettrice (210) comprenant un premier émetteur (212-*i*) et au moins un deuxième émetteur (212-*j*), dans lequel le premier émetteur (212-*i*) communique avec un premier récepteur (214-*i*) et le deuxième émetteur (212-*j*) communique avec un deuxième récepteur (214-*j*), le procédé comprenant les étapes suivantes :

déterminer des premières informations de précodage d'émission (253) sur la base d'interférences subies au niveau du deuxième récepteur (214-*j*) en raison d'émissions de signaux brouilleurs au moins à partir du premier émetteur (212-*i*) de la grappe émettrice (210) et à partir d'émetteurs (216) du système de communication sans fil (200) à l'extérieur de la grappe émettrice (210) ;

déterminer des deuxièmes informations de précodage d'émission (255) sur la base d'informations d'états de canaux croisés d'un canal de communication sans fil entre le deuxième récepteur (214-*j*) et le premier émetteur (212-*i*) de la grappe émettrice (210) ; et

précoder le signal d'émission, $\mathbf{s}_i$, émis à partir du premier émetteur (212-*i*) vers le premier récepteur (214-*i*) sur la base des premières et deuxièmes informations de précodage d'émission déterminées (253 ; 255).

15. Programme informatique possédant un code de programme pour exécuter le procédé selon la revendication 14, lorsque le programme informatique est exécuté sur un ordinateur ou une professeur.

Fig. 1a

Fig. 1b

Fig. 2a

Fig. 2b

Fig. 3a

Fig. 3b

Fig. 4a

Fig. 4b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V.R. CADAMBE ; S.A. JAFAR.** Interference Alignment and Degrees of Freedom of the K-User Interference Channel. *IEEE Trans. Inform. Theory,* August 2008, vol. 54 (8
- **K. S. GOMADAM ; V. R. CADAMBE ; SYED A. JAFAR.** Approaching the Capacity of Wireless Networks through Distributed Interference Alignment. *Proceedings of IEEE GLOBECOM,* December 2008
- **O. EL AYACH ; S. W. PETERS ; R. W. HEATH.** The Feasibility of Interference Alignment Over Measured MIMO-OFDM Channels. *IEEE Trans. Veh. Technol.,* vol. 59 (9
- **R. TRESCH ; M. GUILLAUD.** Clustered Interference Alignment in Large Cellular Networks. *Proceedings of IEEE PIMRC,* September 2009

- **B. ZHUANG ; R. A. BERRY ; M. L. HONIG.** Interference Alignment in MIMO Cellular Networks. *Proceedings of IEEE ICASSP,* May 2011
- **C. SUH ; M. HO ; D. TSE.** Downlink interference alignment. *Global Telecommunications Conference (GLOBECOM 2010),* 2010
- **M. SADEK ; A. TARIGHAT ; A. SAYED.** A leakage-based precoding scheme for downlink multi-user MIMO channels. *IEEE Trans. Wireless Commun.,* May 2007, vol. 6 (5
- **J. WINTERS.** Optimum combining in digital mobile radio with co-channel interference. *IEEE Trans. Veh. Technol.,* August 1984, vol. 33 (3
- Further Advancements for E-UTRA Physical Layer Aspects. *3GPP TR 36.814*
- Spatial Channel Model for MIMO Simulations. *3GPP TR 25.996*